(19) Europäisches Patentamt
European Patent Office
Office européen des brevets

(11) EP 1 978 047 B1

# (12) EUROPEAN PATENT SPECIFICATION

(45) Date of publication and mention of the grant of the patent:
**04.03.2015 Bulletin 2015/10**

(51) Int Cl.:
*C08G 18/63* (2006.01) *C08G 18/76* (2006.01)
*C08F 283/06* (2006.01) *C08F 283/00* (2006.01)
*C08F 290/06* (2006.01)

(21) Application number: **08157936.9**

(22) Date of filing: **28.08.2001**

(54) **Polymer polyol composition, method for producing the same, and method for producing polyurethane resin**

Polymerpolyolzusammensetzung, Herstellungsverfahren dafür und Verfahren zur Herstellung von Polyurethanharz

Composition polymère de polyols, son procédé de fabrication et procédé de fabrication de résine de polyuréthane

(84) Designated Contracting States:
**DE FR GB**

(30) Priority: **31.08.2000 JP 2000263761**
**07.02.2001 JP 2001031546**

(43) Date of publication of application:
**08.10.2008 Bulletin 2008/41**

(62) Document number(s) of the earlier application(s) in accordance with Art. 76 EPC:
**01958585.0 / 1 316 569**

(73) Proprietor: **Sanyo Chemical Industries, Ltd.**
**Kyoto-shi,**
**Kyoto 605-0995 (JP)**

(72) Inventors:
- **Furuta, Takeshi**
**Otsu-shi,**
**Shiga 520-0006 (JP)**
- **Ikeda, Kiyoshi**
**Shizuoka 420-0813 (JP)**
- **Tsuji, Takayuki**
**Sakyo-ku,**
**Kyoto-shi,**
**Kyoto 606-0088 (JP)**

(74) Representative: **Vossius & Partner**
**Siebertstrasse 3**
**81675 München (DE)**

(56) References cited:
**JP-A- 6 056 943** **US-A- 4 342 840**
**US-A- 4 521 546** **US-A- 5 554 662**
**US-A- 5 594 066**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 978 047 B1

## Description

TECHNICAL FIELD

The present invention relates to polymer polyol compositions, methods for producing the same, and a method for producing polyurethane resins using the obtained polymer polyol compositions.

BACKGROUND ART

Polymer compositions or mixtures obtained by polymerizing an ethylenically unsaturated compound in a polyol are generally referred to as polymer polyols, and are used widely as the materials of polyurethane resins such as polyurethane foams or polyurethane elastomers.

It is known that the content of polymer particles in a polymer polyol may be increased to produce a polymer polyol that provides a high quality polyurethane with a greater hardness and a higher elastic modulus. Known methods to obtain such a polymer polyol include a method of polymerizing a vinyl monomer in the presence of a modified polyol, a portion of which has been allowed to react with a coupling agent (a silicon-containing compound, tetrakisalkoxy orthoformate, trialkoxyalkane, dialkoxyalkane, or the like) to increase its molecular weight (e.g. WO 85/04891), a method of polymerizing a vinyl monomer in the presence of a macromer containing an urethane bond (e.g. JP 61(1986)-115919 A), etc.

However, the polymer polyol compositions obtained by the above methods have deficiencies such as poor dispersion stability or deteriorated miscibility with an isocyanate when forming a polyurethane resin, and there were difficulties in handling. Thus, it has been difficult to obtain a polymer polyol composition having good dispersion stability even when the content of polymer particles is high.

The inventors of the present invention have made earnest investigations to solve the above problems, and found that the use of a specific compound having an ethylenically-unsaturated group at a terminal (hereinafter referred to as terminal ethylenically-unsaturated group containing compound) and/or a specific reactive dispersant provides a polymer polyol composition that provides a high quality polyurethane and has good dispersion stability, thus reaching the present invention.

SUMMARY OF THE INVENTION

The present invention relates to the subject-matter disclosed in the claims.

Particularly, the present invention relates to a polymer polyol composition comprising a dispersion medium composed of a polyol (A), or (A) and a diluent (C), and polymer particles (B) dispersed in the dispersion medium, wherein the polymer particles (B) are formed by polymerizing an ethylenically unsaturated compound (b) in the dispersion medium in the presence of a reactive dispersant (D11), the reactive dispersant (D11) being an unsaturated polyol having a nitrogen-containing bond, which is formed by bonding a substantially saturated polyol (a) with a monofunctional active hydrogen compound (e) having at least one polymerizable unsaturated group via a polyisocyanate (f), and whose average value of a ratio of a number of unsaturated groups to a number of nitrogen-containing bonds originating from an NCO group in one molecule of (D11) is 0.1 to 0.3.

Furthermore, the present invention relates to a method for producing a polymer polyol composition, which method comprises polymerizing an ethylenically unsaturated compound (b) in a polyol (A) in the presence of a dispersant (D) and in the presence or absence of a diluent (C), wherein a reactive dispersant (D11) is used as the reactive dispersant (D), so as to obtain the polymer polyol composition as described above, the reactive dispersant (D11) being an unsaturated polyol having a nitrogen-containing bond, which is formed by bonding a substantially saturated polyol (a) with a monofunctional active hydrogen compound (e) having at least one polymerizable unsaturated group via a polyisocyanate (f), whose average value of a ratio of a number of unsaturated groups to a number of nitrogen-containing bonds originating from an NCO group in one molecule of (D11) is 0.1 to 0.3.

Moreover, the present invention relates to a method for producing a polyurethane resin, which method comprises reacting a polyol component with a polyisocyanate component in the presence or absence of a blowing agent, wherein the polymer polyol composition as described above is used as at least a part of the polyol component.

The present description also describes the following Items:

[First Item] (1) A polymer polyol composition comprising a dispersion medium composed of a polyol (A), or (A) and a diluent (C), and polymer particles (B) dispersed in the dispersion medium, wherein the polymer particles (B) are formed by polymerizing an ethylenically unsaturated compound (b) in the dispersion medium in the presence or absence of a dispersant (D), wherein at least 5 mass% of (b) comprises a terminal ethylenically-unsaturated group containing compound (b1) having a number-average molecular weight of 160 to 490 and a solubility parameter SP

of 9.5 to 13.

[Second Item] (2) A polymer polyol composition comprising a dispersion medium composed of a polyol (A), or (A) and a diluent (C), and polymer particles (B) dispersed in the dispersion medium, wherein the polymer particles (B) are formed by polymerizing the ethylenically unsaturated compound (b) in the dispersion medium, in the presence of 0.5 to 50 mass parts of a reactive dispersant (D1) as follows with respect to 100 mass parts of (A): the reactive dispersant (D1) is a dispersant comprising an unsaturated polyol having a nitrogen-containing bond, which polyol is formed by bonding a substantially saturated polyol (a) with a monofunctional active hydrogen compound (e) having at least one polymerizable unsaturated group via a polyisocyanate (f).

[Third Item] (3) A polymer polyol composition comprising a dispersion medium composed of a polyol (A), or (A) and a diluent (C), and polymer particles (B) dispersed in the dispersion medium, wherein the polymer particles (B) are formed by polymerizing the ethylenically unsaturated compound (b) in the dispersion medium in the presence of a reactive dispersant (D11) as follows: the reactive dispersant (D11) is a dispersant comprising an unsaturated polyol having a nitrogen-containing bond, which is formed by bonding a substantially saturated polyol (a) with a monofunctional active hydrogen compound (e) having at least one polymerizable unsaturated group via a polyisocyanate (f), and whose average value of a ratio of a number of unsaturated groups to a number of nitrogen-containing bonds originating from an NCO group in one molecule of (D11) is 0.1 to 0.4.

[Fourth Item ] (4) A method for producing a polymer polyol composition, which method comprises polymerizing an ethylenically unsaturated compound (b) in a polyol (A) in the presence of at least one selected from a dispersant (D) and a diluent (C) or in the absence of the both, wherein at least 5 mass% of (b) comprises a terminal ethylenically-unsaturated group containing compound (b1) having a number-average molecular weight of 160 to 490 and a solubility parameter SP of 9.5 to 13, so as to obtain the polymer polyol composition as set forth in the above item (1).

[Fifth Item] (5) A method for producing a polymer polyol composition, which method comprises polymerizing an ethylenically unsaturated compound (b) in a polyol (A) in the presence of a dispersant (D) and in the presence or absence of a diluent (C), wherein a reactive dispersant (D1) as follows is used as the dispersant (D), so as to obtain the polymer polyol composition as set forth in the above item (2): the reactive dispersant (D1) is an unsaturated polyol having a nitrogen containing bond, which is formed by bonding a substantially saturated polyol (a) with a monofunctional active hydrogen compound (e) having at least one polymerizable unsaturated group via a polyisocyanate (f).

[Sixth Item] (6) A method for producing a polymer polyol composition, which method comprises polymerizing an ethylenically unsaturated compound (b) in a polyol (A) in the presence of a dispersant (D) and in the presence or absence of a diluent (C), wherein a reactive dispersant (D11) as follows is used as the reactive dispersant (D), so as to obtain the polymer polyol composition as set forth in the above item (3): the reactive dispersant (D11) is an unsaturated polyol having a nitrogen-containing bond, which is formed by bonding a substantially saturated polyol (a) with a monofunctional active hydrogen compound (e) having at least one polymerizable unsaturated group via a polyisocyanate (f), whose average value of a ratio of a number of unsaturated groups to a number of nitrogen-containing bonds originating from an NCO group in one molecule of (D11) is 0.1 to 0.4.

[Seventh Item] (7) A method for producing a polyurethane resin, which method comprises reacting a polyol component with a polyisocyanate component in the presence or absence of a blowing agent, wherein the polymer polyol composition as set forth in any one of the foregoing items (1) to (3) is used as at least a part of the polyol component.

## DETAILED DESCRIPTION OF THE INVENTION

As the polyol (A) in the present invention, known polyols usually used in the production of polymer polyols may be employed. For example, compounds (A1) formed by adding an alkylene oxide to a compound containing two or more (preferably 2 to 8) active hydrogen atoms (e.g. polyhydric alcohols, polyhydric phenols, amines, polycarboxylic acids and phosphoric acids) and mixtures thereof may be used.

Among these, compounds formed by adding an alkylene oxide to a polyhydric alcohol are preferred.

The polyhydric alcohols include dihydric alcohols having 2 to 20 carbon atoms (aliphatic diols, for instance, alkylene glycols such as ethylene glycol, propylene glycol, 1,3- or 1,4-butanediol, 1,6-hexanediol, and neopentylglycol; and alicyclic diols, for instance, cycloalkylene glycols such as cyclohexanediol and cyclohexanedimethanol); trihydric alcohols having 3 to 20 carbon atoms (aliphatic triols, for instance, alkane triols such as glycerol, trimethylolpropane, trimethylolethane, and hexanetriol); polyhydric alcohols having 4 to 8 or more hydroxyl groups and 5 to 20 carbon atoms (aliphatic polyols, for instance, alkane polyols and intramolecular or intermolecular dehydration products of the same such as pentaerythritol, sorbitol, mannitol, sorbitan, diglycerol, and dipentaerythritol; and saccharides and derivatives of the same such as sucrose, glucose, mannose, fructose, and methylglucoside).

The polyhydric phenols include monocyclic polyhydric phenols such as pyrogallol, hydroquinone and phloroglucinol; bisphenols such as bisphenol A, bisphenol F and bisphenol sulfone; and condensation products of phenols and formaldehyde (novolak).

The amines include ammonia; and aliphatic amines such as alkanol amines having 2 to 20 carbon atoms (e.g. monoethanolamine, diethanolamine, isopropanolamine and aminoethylethanolamine), alkyl amines having 1 to 20 carbon atoms (e.g. n-butylamine and octylamine), alkylene diamines having 2 to 6 carbon atoms (e.g. ethylenediamine, propylenediamine and hexamethylenediamine), and polyalkylene polyamines (from dialkylene triamines to hexaalkylene heptamines having 2 to 6 carbon atoms in the alkylene group, e.g. diethylenetriamine and triethylenetetramine).

The amines further include aromatic mono- or polyamines having 6 to 20 carbon atoms (e.g. aniline, phenylenediamine, tolylenediamine, xylylenediamine, diethyl toluenediamine, methylenedianiline, and diphenyl ether diamine); alicyclic amines having 4 to 20 carbon atoms (isophoronediamine, cyclohexylenecliamine and dicyclohexylmethanediamine); and heterocyclic amines having 4 to 20 carbon atoms (e.g. aminoethylpiperazine).

The polycarboxylic acids include aliphatic polycarboxylic acids having 4 to 18 carbon atoms (e.g. succinic acid, adipic acid, sebacic acid, glutaric acid, and azelaic acid), aromatic polycarboxylic acids having 8 to 18 carbon atoms (e.g. terephthalic acid and isophthalic acid), and mixtures of two or more thereof.

As the alkylene oxide added to the active hydrogen-containing compound, alkylene oxides having 2 to 8 carbon atoms are preferable. The alkylene oxides include ethylene oxide (hereinafter abbreviated as EO), propylene oxide (hereinafter abbreviated as PO), 1,2-, 1,4-, 1-3, or 2,3-butylene oxide (hereinafter abbreviated as BO), styrene oxide (hereinafter abbreviated as SO) and combinations of two or more thereof (block addition and/or random addition). Preferably, PO or a combination of PO and EO (containing not more than 25 mass % of EO) is used.

Specific examples of the polyol are adducts of PO to the active hydrogen-containing compound, and adducts of PO and other alkylene oxide (hereinafter abbreviated as AO) to the active hydrogen-containing compounds produced by the following methods, or esterification products of these adduct compounds with a polycarboxylic acid or phosphoric acid:

(i) block addition of PO-AO in this order (capped);
(ii) block addition of PO-AO-PO-AO in this order (balanced);
(iii) block addition ofAO-PO-AO in this order;
(iv) block addition of PO-AO-PO in this order (active secondary); (v) random addition of mixed PO andAO; and
(vi) random addition or block addition according to the order described in the specification of U.S. Patent No. 4226756.

Furthermore, a hydroxyl equivalent of the compound (A1) is preferably 200 to 4000, more preferably 400 to 3000. Two or more types of compounds (A1) in combination having a total hydroxy equivalent in the foregoing range are preferably used as well.

As the polyol (A), the compounds (A1) formed by adding an alkylene oxide to the active hydrogen-containing compound in combination with other polyols (A2) may be used. In this case, the ratio (by mass) of (A1)/(A2) used is preferably from 100/0 to 80/20.

Other polyols (A2) include high-molecular polyols such as polyester polyols and diene-type polyols, and mixtures thereof.

The polyester polyols include: condensation reaction products of the above described polyhydric alcohols and/or polyether polyols (e.g. dihydric alcohols such as ethylene glycol, diethylene glycol, propylene glycol, 1,3- or 1,4-butanediol, 1,6-hexanediol and neopentylglycol, mixtures of these dihydric alcohols with polyhydric alcohols having three or more hydroxyl groups, such as glycerol and trimethylol propane, and low-mole (1 to 10 moles) alkylene oxide adducts of these polyhydric alcohols) with the above described polycarboxylic acids, with ester-forming derivatives such as anhydrides of the polycarboxylic acids or lower alkyl (the number of carbon atoms in the alkyl group: 1, to 4) esters of the polycarboxylic acids (e.g. adipic acid, sebacic acid, maleic anhydride, phthalic anhydride, dimethyl terephthalate ), or with the above-described carboxylic anhydride and alkylene oxide; alkylene oxide (EO, PO ) adducts of the condensation reaction products; polylactone polyol, for instance, products obtained by ring-opening polymerization of lactones (ε-caprolactone ) by using the above-described polyhydric alcohol, as an initiator; polycarbonate polyols, for instance, a reaction product of the above-described polyhydric alcohol and diesters of carbonic acids with lower alcohols (methanol ).

Furthermore, the polyester polyols include diene-type polyols such as polybutadiene polyol, and hydrogenate products of the same; hydroxyl-containing vinyl polymers such as acrylic polyols; polyols based on a natural oil, such as castor oil; modification products of natural oil-based polyols.

These polyols (A2) usually have 2 to 8 hydroxyl groups, preferably 3 to 8 hydroxyl groups, and usually have a hydroxyl equivalent of 200 to 4000, preferably 400 to 3000.

The number-average molecular weight (according to gel permeation chromatography (GPC); this also applies to the number-average molecular weights described below) of the polyol (A) is usually at least 500, preferably from 500 to 20,000, particularly preferably from 1,200 to 15,000, most preferably from 2,000 to 9,000. When the number-average molecular weight of the polyol (A) is at least 500, the polyurethane foam produced is preferable from the view point of the foaming property. Furthermore, when the number-average molecular weight of (A) is not more than 10,000, the

viscosity of (A) is low, and it is desirable in the aspect of the handling properties of the polymer polyol. Furthermore, the polyol (A) preferably has a hydroxyl equivalent of 200 to 4000, more preferably 400 to 3000.

In the polymer polyol composition of the first to fourth inventions, the ethylenically unsaturated compound (b) contains, as its essential component, not less than 5 mass% of a terminal-ethylenically-unsaturated-group containing compound (b1) having a number-average molecular weight of 160 to 490 and a solubility parameter SP of 9.5 to 13. The number-average molecular weight of (b1) is preferably 170 to 480, more preferably 180 to 450, particularly preferably 182 to 420, most preferably 185 to 400. With a number-average molecular weight of not less than 160, a polymer polyol composition has a low viscosity, which is preferable from the viewpoint of handling, and foams with a good hardness can be obtained as well. In the case where (b1) has a number-average molecular weight of not more than 490, a polyurethane foam obtained using this has a good hardness.

As to the number of ethylenically unsaturated groups in (b1), not less than one ethylenically unsaturated group in average will suffice. The number is preferably 1 to 10, more preferably 1 to 2, particularly preferably 1. In the case where the number of the ethylenically unsaturated groups is less than 1 in average, soluble components in polyols increase, thereby increasing the viscosity of a polymer polyol obtained, and further, significantly impairing the properties of a polyurethane resin formed using the same. It should be noted that as long as at least one ethylenically unsaturated group of (b1) (in average) is present at a terminal, the other unsaturated groups can be present at terminals or at positions that are not terminals.

More specifically, examples of the foregoing ethylenically unsaturated groups include $\alpha$-alkenyl groups such as (meth)acryloyl groups and allyl groups.

Furthermore, a molecular weight (X) per one double bond of (b1) is preferably not more than 490, more preferably 160 to 480, particularly preferably 180 to 450, most preferably 185 to 400. In the case where it is not more than 490, a significant effect of decreasing polyol-soluble oligomers in a polymer polyol produced by using the same can be achieved.

Here, the molecular weight (X) per one double bond of (b1) is defined as shown by a formula below:

$$X = 1000/N$$

where N represents an unsaturation degree of (b1) measured by the method specified in JIS K-1557.

Furthermore, (b1) usually has a solubility parameter SP of 9.5 to 13, preferably 9.8 to 12.5, more preferably 10.0 to 12.2. In the case where SP of (b1) is less than 9.5, a polymer polyol produced using the same has a high viscosity. Furthermore, in the case where SP is more than 13, a defect occurs such as a decreased hardness of a foam obtained using the polymer polyol.

The solubility parameter SP in the first through fourth inventions refers to the parameter expressed by the square root of the ratio of a cohesive energy density to a molar volume as follows:

$$[\text{Solubility Parameter}] = (\Delta E / V)^{1/2}.$$

In the above equation, $\Delta E$ indicates a cohesive energy density, and V indicates a molar volume. The value of V is determined by the calculation of Robert F. Fedoors et al., which is described, for example, in Polymer Engineering and Science, Volume 14, pages 147 to 154. It is described that the solubility parameters of typical resins are, for example, as follows: as the values of vinyl-based polymers, polystyrene = 10.6, polyacrylonitrile = 14.4, poly(methyl methacrylate) = 9.9; as the values of polyethere, polyethylene glycol = 9.4, polypropylene glycol = 8.7; as the values of polyolefins, polyethylene = 8.6, polypropylene = 8.0; as the values of polyesters, poly(ethylene terephthalate) = 12.4, poly(butylene terephthalate) = 11.7; and as the values of polyamides, 6-nylon = 11.9, 6,6-nylon = 11.9. The values of other resins also can be calculated by combining the values of respective chemical bonds shown in the table. For example, the value of polyimide is calculated from the values of pyromellitic acid and 1,4-diaminobenzene to be 19.6, and the value of polyurethane is calculated from 1,4-butanediol and diphenylmethanediisocyanate to be 12.3. However, the real values may be more or less different from these calculated values, due to a small difference in the structure or the structures at the terminals of the resins.

Examples that are preferably used as (b1) include (b11) to (b15) shown below, since with the same, an obtained polymer polyol has a low viscosity, thereby causing an obtained polyurethane foam to have a greater hardness. Two or more may be used in combination.

(b11): (poly)oxyalkylene ($C_2$-$C_8$ in the alkylene group) ether of a terminal unsaturated alcohol ($C_3$-$C_{24}$);
(b12): compound expressed by a general formula [1] shown below;
(b13): compound expressed by a general formula [2] shown below;

(b14): compound expressed by a general formula [3] shown below;
(b15): compound expressed by a general formula [4] shown below:

$$CH_2 = CRCOO(AO)_kCOCH_2COCH_3 \qquad [1]$$

$$CH_2 = CRCOO(AO)_k[CO(CH_2)_sO]_m(AO)_nH \qquad [2]$$

$$CH_2 = CRCO[O(CH_2)_sCO]_mO(AO)_nH \qquad [3]$$

$$CH_2 = CRCOO(AO)_k[QO(AO)_p]_r(QO)_tH \qquad [4]$$

where:

R represents a hydrogen atom or a methyl group;
A represents an alkylene group having 2 to 8 carbon atoms;
Q represents a residue obtained by removing two OH groups from dicarboxylic acid;
k represents an integer of not less than 1, that provides a number-average molecular weight of not more than 490;
n and p represent 0 or integers of not less than 1 that provide a number-average molecular weight of not more than 490;
s represents an integer of 3 to 7;
m and r are integers of not less than 1 that provide a number-average molecular weight of not more than 490; and
t represents 0 or 1.

Here, the number-average molecular weight mentioned in the above description, as in the phrase "provides a number-average molecular weight of not more than 490", indicates a number-average molecular weight of the foregoing compound.

Examples of the terminal unsaturated alcohol having 3 to 24 carbon atoms in the foregoing (b11) include allyl alcohol, 1-hexen-3-ol. The number of oxyalkylene units in (b11) is usually 1 to 9, preferably 1 to 5, more preferably 1 to 3.

In the foregoing general formulae [1] to [4], A represents an alkylene group having 2 to 8 carbon atoms, an AO unit is usually formed by adding an alkylene oxide having 2 to 8 carbon atoms, and k, n, and p are equivalent to the numbers of added moles of the alkylene oxide, respectively. Furthermore, (poly)oxyalkylene units having 2 to 8 carbon atoms in the alkylene group of (b11) are also usually formed by adding an alkylene oxide having 2 to 8 carbon atoms.

Examples of the foregoing alkylene oxide include those mentioned in the description about the polyol (A) as alkylene oxides to be added to an active hydrogen-containing compound. The alkylene oxide is preferably PO and/or EO.

k is preferably 1 to 7, more preferably 1 to 5, particularly preferably 1. n is preferably either 0 or 1 to 7, more preferably either 0 or 1 to 5, particularly preferably 0. p is preferably either 0 or 1 to 6.

Examples of Q include a residue obtained by removing two OH groups from a dicarboxylic acid. Preferable examples of the dicarboxylic acid are those having 4 to 10 carbon atoms. More specifically, the examples include phthalic acid (including isophthalic acid and terephthalic acid), maleic acid, fumaric acid, and succinic acid. Phthalic acid and succinic acid are preferred.

The parts of the $[CO(CH_2)_sO]$ unit and the $[O(CH_2)_sCO]$ unit are usually formed by adding lactone. s is preferably 4 to 6, more preferably 5. m is preferably 1 to 5, more preferably 1 to 3, particularly preferably 2.

Furthermore, r is preferably 1 to 5, more preferably 1 or 2, particularly preferably 1.

Among these (b11) to (b15), (b11) and (b12) are more preferred, and (b11) is particularly preferred.

As to examples of (b11) to (b15), examples of (b11), for instance, include 1 to 5-mole PO and/or EO adducts of allyl alcohol.

Examples of (b12) include an acetoacetic ester of a compound obtained by adding 1 to 5 moles of PO and/or EO to 1 mole of (meth)acrylic acid.

Examples of (b13) include a compound obtained by adding 1 to 5 moles of ε-caprolactone to a compound obtained by adding 1 to 5 moles of PO and/or EO to 1 mole of a (meth)acrylic acid, and a compound obtained by further adding 1 to 5 moles of PO and/or EO to 1 mole of the foregoing compound.

Examples of (b14) include a compound obtained by adding 1 to 5 moles of ε-caprolactone to 1 mole of a (meth)acrylic acid, and a compound obtained by further adding 1 to 5 moles of PO and/or EO to 1 mole of the foregoing compound.

Examples of (b15) include: a monoester of a compound obtained by adding 1 to 5 moles of PO and/or EO to 1 mole of a (meth)acrylic acid with the equal number of moles of succinic acid; a monoester of a compound obtained by adding 1 to 5 moles of PO and/or EO to 1 mole of a (meth)acrylic acid with the equal number of moles of maleic acid

or fumaric acid; a compound obtained by preparing a monoester of a compound obtained by adding 1 to 5 moles of PO and/or EO to 1 mole of a (meth)acrylic acid with the equal number of moles of phthalic acid, then adding 1 to 5 moles of PO and/or EO to 1 mole of the foregoing monoester; and a monoester of the foregoing compound with the equal number of moles of phthalic acid.

In the polymer polyol composition of the present invention, an ethylenically unsaturated compound (b2) having a number-average molecular weight of less than 500, which is normally used, other than (b1), may be used as the ethylenically unsaturated compound (b). Examples of (b2) include aromatic hydrocarbon monomers (b2-1), unsaturated nitriles (b2-2), (meth)acrylic acid esters (b2-3), and other ethylenically unsaturated compounds (b2-4), and mixtures of two or more thereof.

Examples of (b2-1) include styrene, $\alpha$-methylstyrene, hydroxylstyrene, chlorostyrene.

Examples of (b2-2) include acrylonitrile, methacrylonitrile.

Examples of (b2-3) include (meth)acrylic acid alkyl esters ($C_1$-$C_{24}$ in the alkyl group) such as methyl(meth)acrylate, butyl(meth)acrylate, nonyl(meth)acrylate, decyl(meth)acrylate, undecyl(meth)acxylate, dodecyl(meth)acrylate, tridecyl(meth)acrylate, tetradecyl(meth)acrylate, pentadecyl(meth)acrylate, hexadecyl(meth)acrylate, octadecyl(meth)acrylate, eicosyl(meth)acrylate, and docosyl(meth)acrylate; hydroxypolyoxyalkylene ($C_2$-$C_8$ in the alkyl group) mono(meth)acrylates.

Examples of (b2-4) include (meth)acrylamide; vinyl-containing carboxylic acids and derivatives thereof, such as (meth)acrylic acid; aliphatic hydrocarbon monomers, such as ethylene and propylene; fluorine-containing vinyl monomers, such as perfluorooctylethyl methacrylate and perfluorooctylethyl acrylate; nitrogen-containing vinyl monomers other than those described above, such as diaminoethyl methacrylate and morpholinoethyl methacrylate; vinyl-modified silicone; cyclic olefin compounds, such as norbornene, cyclopentadiene and norbornadiene.

Among these, (b2-1) and (b2-2) are preferred, and styrene and/or acrylonitrile are more preferred. A total content of the aromatic hydrocarbon monomer and the unsaturated nitrile in (b2) is preferably not less than 50 mass%.

Furthermore, by using polyfunctional vinyl-containing monomers (b2-5) that has two or more functional groups (preferably from 2 to 8 functional groups) and that has a number-average molecular weight of less than 500, other than those described above, as at least a portion of (b) (preferably from 0.05 to 1 mass %), the strength of the polymer can be increased. The polyfunctional vinyl-containing monomers include divinylbenzene, ethylene di(meth)acrylate, polyalkylene ($C_2$-$C_8$ in the alkylene group) glycol di(meth)acrylate, pentaerythritol triallyl ether, trimethylolpropane tri(meth)acrylate.

Furthermore, ethylenically unsaturated compounds (b3) having a number-average molecular weight of at least 500, shown below, may be used as (b).

Among examples of (b3), those having one double bond in the molecule include unsaturated aliphatic dicarboxylic acid ($C_4$-$C_{24}$) diesters of aliphatic alcohol ($C_1$-$C_{24}$) (poly)oxyalkylene ($C_2$-$C_8$ in the alkylene group) ethers, e.g. maleic acid diesters of polyoxypropylene (n = 4 to 30; n herein refers to the polymerization degree of the polyoxypropylene segment, and hereinafter, unless otherwise specified, "n" likewise refers to the polymerization degree of the (poly)oxyalkylene segment) monomethyl ethers, fumaric acid diesters of polyoxypropylene (n = 3 to 30) monobutyl ethers, and itaconic acid diesters of random adducts of butanol polyoxybutylene (n = 2 to 20)-polyoxyethylene (n = 2 to 10); aliphatic alcohol ($C_1$-$C_{24}$) polyoxyalkylene ($C_2$-$C_8$ in the alkylene group) ether (meth)acrylates, e.g. polyoxypropylene [n = 8(7) to 30] monomethyl ether (meth)acrylates [the numerical value in the parenthesis for n shows the case of methacrylate; this also applies to the following], polyoxybutylene [n = 6(5) to 20] monobutyl ether (meth)acrylates, and polyoxypropylene (n = 5 to 30) monolauryl ether (meth)acrylates; polyoxyalkylene ($C_2$-$C_8$ in the alkylene group) ethers of unsaturated alcohols ($C_3$-$C_{24}$), e.g. polyoxypropylene (n = 4 to 30) monooleyl ethers, polyoxypropylene (n = 8 to 30) monoallyl ethers; unsaturated aliphatic monocarboxylic acid ($C_3$-$C_{24}$) polyoxyalkylene ($C_2$ -$C_8$ in the alkylene group) esters, e.g. random adducts of oleic acid propylene oxide (n = 2 to 30)-ethylene oxide (n = 2 to 10) having a number-average molecular weight of at least 500.

Examples of (b3) having two double bonds in the molecule include polyalkylene ($C_2$-$C_8$ in the alkylene group) glycol di(meth)acrylates, e.g. polypropylene glycol [n = 7(6) to 30] di(meth)acrylates, and polybutylene glycol [n = 6(5) to 20] di(meth)acrylates; aliphatic carboxylic acid ($C_2$-$C_{24}$) diesters of unsaturated alcohols ($C_3$-$C_{24}$), e.g. succinic acid diesters of polyoxypropylene (n = 3 to 30) monoallyl ethers, adipic acid diesters of polyoxypropylene (n = 3 to 30) monoallyl ethers, succinic acid diesters of polyoxypropylene (n = 3 to 30) monopropenyl ethers.

Examples of (b3) having three double bonds in the molecule include unsaturated fatty acid ($C_3$-$C_{24}$) triesters oftrihydric alcohols ($C_3$-$C_{12}$), e.g. tri(meth)acrylates of glycerol polyoxypropylene [n = 5(4) to 30] ethers, tri(meth)acrylates of trimethylolpropane polyoxypropylene [n = 4(3) to 30] ethers, tri(metb)acrylates of pentaerythritol polyoxypropylene [n = 4(3) to 30] ethers, tri(meth)acrylates of diglycerol polyoxypropylene (n = 3 to 30) ethers, and sorbitan polyoxybutylene [n = 3(2) to 20] tri(meth)acrylates; aliphatic carboxylic acid ($C_3$-$C_{24}$) triesters of unsaturated alcohols ($C_3$-$C_{24}$), e.g. hexanetricarboxylic acid triesters of allyl alcohol (poly)oxypropylene (n = 1 to 30) ethers; unsaturated alkyl-containing ether compounds, e.g. triallyl ethers of glycerol polyoxypropylene (n = 5 to 30) ethers.

Examples of (b3) having four double bonds in the molecule include unsaturated fatty acid ($C_3$-$C_{24}$) polyesters

of polyhydric (4 to 8 or more hydroxyl groups) alcohols, e.g. polyglycerol (polymerization degree of glycerol: n = 3 to 4) poly(meth)acrylates having a number-average molecular weight of at least 500 (as to a polyglycerol group, hereinafter n refers to a polymerization degree of glycerol), polyglycerol (n = 2 to 4) polyolates having a number-average molecular weight of at least 500, dipentaerythritol poly(meth)acrylates having a number-average molecular weight of at least 500, polyglycerol (n = 2 to 4) (poly)oxypropylene (n = 1 to 30) poly(meth)acrylates having a number-average molecular weight of at least 500, tetra(meth)acrylates of pentaerythritol polyoxypropylene [n = 3(2) to 30] ethers, tetra(meth)acrylates of sorbitan polyoxybutylene (n = 2 to 20) ethers, and polyvinyl alcohol (saponification value of 70 to 100; number-average molecular weight of 1,000 to 10,000) (meth)acrylates; polycarboxylic esters (number-average molecular weight of 1,000 to 10,000) of unsaturated alcohols ($C_3$-$C_{24}$), e.g. hexane tetracarboxylic acid esters of allyl alcohol (poly)oxypropylene (n = 1 to 30) ethers, polyesters (number-average molecular weight of 1,000 to 10,000) of (meth)acrylic acid polymers and allyl alcohols, and polyesters (number-average molecular weight of 1,000 to 10,000) of maleic acid polymers and allyl alcohols; unsaturated alkyl-containing ether compounds, e.g. tetraglycerol polyallyl ethers having a number-average molecular weight of at least 500, and polyallyl ethers of polyglycerol (n = 2 to 4) (poly)oxypropylene (n = 1 to 30) ethers having a number-average molecular weight of at least 500; polyesters (number-average molecular weight of 500 to 10,000) of unsaturated carboxylic acids ($C_4$-$C_{22}$) and glycols, e.g. polyesters (number-average molecular weight of 500 to 10,000) of maleic acid and ethylene glycol, polyesters (number-average molecular weight of 500 to 10,000) of maleic acid and diethylene glycol, polyesters (number-average molecular weight of 500 to 10,000) of maleic acid and propylene glycol, polyesters (number-average molecular weight of 500 to 10,000) of maleic acid and 1,3- or 1,4-butanediol, polyesters (number-average molecular weight of 500 to 10,000) of itaconic acid and ethylene glycol, polyesters (number-average molecular weight of 500 to 10,000) of itaconic acid and diethylene glycol, polyesters (number-average molecular weight of 500 to 10,000) of maleic acid and polyoxypropylene glycol (n = 1 to 30), polyesters (number-average molecular weight of 500 to 10,000) of itaconic acid and polyoxypropylene glycol (n = 1 to 30), and polyesters (number-average molecular weight of 500 to 10,000) of fumaric acid and polyoxybutylene glycol (n = 1 to 20).

Among these (b3), ester compounds formed from an unsaturated carboxylic acid (p) and a glycol (q) and/or ester compounds formed from an unsaturated alcohol (r) and a carboxylic acid (s) are preferred. Particularly, radically polymerizable compounds formed from an unsaturated carboxylic acid (p) and a glycol (q) are preferred.

The unsaturated carboxylic acid (p) is a carboxylic acid having double bonds (non-conjugated in the case of two or more double bonds) in the molecule or a derivative thereof, e.g. a carboxylic acid having 3 to 24 carbon atoms, such as acrylic acid, methacrylic acid, maleic acid, fumaric acid, itaconic acid, citraconic acid or oleic acid; or an acid anhydride such as maleic anhydride, itaconic anhydride or citraconic anhydride. Preferably, one or more carboxylic acids selected from maleic acid, fumaric acid and itaconic acid, or derivatives thereof are used.

Carboxylic acids other than those described above also can be used simultaneously as needed. Example of such carboxylic acids are aliphatic carboxylic acids having 2 to 24 carbon atoms, such as acetic acid, propionic acid, hexanoic acid, stearic acid, oxalic acid, malonic acid, succinic acid, glutamic acid, adipic acid and sebacic acid; aromatic carboxylic acids having 7 to 18 carbon atoms, such as isophthalic acid and terephthalic acid; and alicyclic carboxylic acids having 6 to 20 carbon atoms, such as 1,4-cyclohexanedicarboxylic acid and tetrahydrophthalic acid.

As the glycol (q), the polyhydric alcohols and polyhydric phenols among the active hydrogen-containing compounds previously described for the polyol (A), and the alkylene oxides having 2 to 8 carbon atoms described above can be used. Preferably, alkylene glycols such as ethylene glycol, diethylene glycol, polyethylene glycol, propylene glycol, polyoxypropylene glycol, 1,3- or 1,4-butanediol, 1,6-hexanediol and neopentyl glycol, and alkylene oxides such as EO, PO, BO and SO are used. More preferably, ethylene glycol, diethylene glycol, 1,4-butanediol, 1,6-hexanediol, neopentyl glycol, EO and PO are used.

The content of (b1) in (b) usually is not less than 2 mass%, preferably 5 to 80 mass%, particularly preferably 7 to 50 mass%.

In the case where the content of (b1) is less than 2 mass%, the obtained polymer polyol tends to have a high viscosity. It is preferred that the content of (b1) is not less than 5 mass%. [First and Fourth Items], but in the case where a reactive dispersant (D1) that will be described later [including (D11)] is used, the content of the same may be less than 5 mass%. A component other than (b1) in (b) is preferably (b2).

The polymerization of (b) can be carried out by, for instance, radical polymerization, coordinated anionic polymerization, metathesis polymerization, Diels-Alder polymerization. Preferably, radical polymerization is employed.

Radical polymerization can be carried out in the same way as the polymerization of conventional polymer polyols. For example, the method of polymerizing an ethylenically unsaturated compound (b) in a polyol (A) containing a dispersant (D) in the presence of a polymerization initiator (the method described in U.S. Patent No. 3383351) may be employed.

Furthermore, the polymerization can be carried out either in batch or continuous systems under atmospheric pressure or increased pressure, or under reduced pressure. A diluent (C) and a chain transfer agent can be used as needed.

Components used in radical polymerization will be described below.

The foregoing dispersant (D) is not particularly limited, and conventional dispersants described below, which are used in polymer polyols, can be employed. The present invention uses a reactive dispersant (D11) as described below.

Examples of (D) include: (i) macromer-type dispersants obtained by reacting a polyol with an ethylenically unsaturated compound, such as a modified polyether polyol containing an ethylenically unsaturated group (e.g. JP 08(1996)-333508 A); (ii) graft-type dispersants obtained by combining a polyol with an oligomer, such as a graft polymer having two or more segments with an affinity for polyols as side chains, in which the difference between the solubility parameter of the side chains and the solubility parameter of a polyol is not more than 1.0, and having a segment with an affinity for polymers as a main chain, in which the difference between the solubility parameter of the main chain and the solubility parameter of a polymer formed from a vinyl monomer is not more than 2.0 (e.g. JP 05(1993).059134A); (iii) high molecular polyol type dispersants, e.g. a modified polyol obtained by reacting at least a portion of the hydroxyl groups in a polyol with a methylene dihalide and/or an ethylene dihalide to increase its molecular weight (e.g. JP 07(1995)-196749 A); (iv) oligomer type dispersants, e.g. a vinyl oligomer with a weight-average molecular weight of 1,000 to 30,000, at least a portion of which being soluble in polyols, and a dispersant comprising both of this oligomer and the modified polyether polyol containing an ethylenically unsaturated group described for (i) above (e.g. JP 09(1997)-77968 A).

Among these, the types (i) and (iv) are preferred. In any case, it is preferable that (D) has a number-average molecular weight of 1,000 to 10,000.

Furthermore, the amount of (D) used in the case where such a conventional dispersant is used as (D) is preferably not more than 15 mass %, more preferably not more than 10 mass %, particularly preferably from 0.1 to 8 mass %, based on the mass of (b).

Apart from these conventional dispersants, reactive dispersants (D1) in the second, third, fifth, and sixth Items (including (D11)), which will be described.later, may be used as the dispersant (D), and they are particularly preferred. The present invention uses the reactive dispersant (D11) as described below.

The reactive dispersant (D1) is made of an unsaturated polyol having a nitrogen-containing bond, which is formed by bonding a substantially saturated polyol (a) with a monofunctional active hydrogen compound (e) having at least one polymerizable unsaturated group via a polyisocyanate (f). As the polyol (a) composing the reactive dispersant (D1), those mentioned as the polyol (A) can be used. The polyols (a) and (A) may be the same, or may be different.

The number of hydroxyl groups in one molecule of the polyol (a) is at least two, preferably two to eight, more preferably three to four. The hydroxyl equivalent of the polyol (a) is preferably 1000 to 3000, more preferably 1500 to 2500.

The compound (e) used for obtaining (D1) is a compound having one active hydrogen-containing group and at least one polymerizable unsaturated group. Examples of the active hydrogen-containing group include a hydroxyl group, an amino group, an imino group, a carboxyl group, an SH group, among which the hydroxyl group is preferred.

The polymerizable unsaturated group of the compound (e) preferably has a polymerizable double bond, and the number of the polymerizable unsaturated groups in one molecule is preferably one to three, more preferably one. More specifically, preferred as the compound (e) is an unsaturated monohydroxy compound having one polymerizable double bond.

Examples of the foregoing unsaturated monohydroxy compound include, for instance, monohydroxy-substituted unsaturated hydrocarbons, monoesters of unsaturated monocarboxylic acids and dihydric alcohols, monoesters of unsaturated dihydric alcohols and monocarboxylic acids, phenols having alkenyl side chain groups, and unsaturated polyether monools.

Examples of the monohydroxy-substituted unsaturated hydrocarbon include: alkenol having 3 to 6 carbon atoms such as (meth)allyl alcohol, 2-butene-1-ol, 3-butene-2-ol, 3-butene-1-ol, etc.; and alkynol, for instance, propargyl alcohol.

Examples of the monoesters of unsaturated monocarboxylic acids and dihydric alcohols include monoesters of: unsaturated monocarboxylic acids each having 3 to 8 carbon atoms, for instance, acrylic acid, methacrylic acid, chrotonic acid, or itaconic acid; and the above-described dihydric alcohols (dihydric alcohols having 2 to 12 carbon atoms such as ethylene glycol, propylene glycol, and butylene glycol). Specific examples of the foregoing monoesters include 2-hydroxy ethyl acrylate, 2-hydroxy ethyl methacrylate, 2-hydroxy propyl acrylate, 2-hydroxy propyl methacrylate, 2-hydroxy butyl acrylate, 4-hydroxy butyl acrylate.

Examples of the monoesters of unsaturated dihydric alcohols and monocarboxylic acids include monoesters of unsaturated dihydric alcohols having 3 to 8 carbon atoms and monocarboxylic acids having 2 to 12 carbon atoms, for instance, acetic acid monoester of butene diol.

Examples of the phenol having an alkenyl side chain group include phenols each having an alkenyl side chain group having 2 to 8 carbon atoms, such as oxystyrene, hydroxy-$\alpha$-methyl styrene.

Examples of the unsaturated polyether monool include 1 to 50-mole alkylene oxide (having 2 to 8 carbon atoms) adducts of the monohydroxy-substituted unsaturated hydrocarbon or the phenol having the alkenyl side chain group (for instance, polyoxyethylene (having a degree of polymerization of 2 to 10) monoallyl ether).

The examples of the compound (e) other than the unsaturated monohydroxy compound include the following.

Examples of the compound (e) having an amino group or an imino group include mono- and di-(meth)allyl

amine, amino alkyl (having 2 to 4 carbon atoms) (meth)acrylate [e.g., amino ethyl (meth)acrylate], and monoalkyl (having 1 to 12 carbon atoms) amino alkyl (having 2 to 4 carbon atoms) (meth)acrylate [e.g., monomethyl amino ethyl-methacrylate]; examples of the compound (e) having a carboxyl group include the aforementioned unsaturated monocarboxylic acids; and examples of the compound (e) having an SH group include compounds corresponding to the aforementioned unsaturated monohydroxy compounds (in which SH substitutes for OH).

Examples of the compound (e) having not less than two polymerizable double bonds include poly(meth)allylethers of the aforementioned polyhydric alcohols having a valence of 3, 4 to 8, or more, or polyesters of the above alcohols with the aforementioned unsaturated carboxylic acids [e.g., trimethylol propane diallylether, pentaerythritol triallylether, glycerol di(meth)acrylate]

Among these compounds, preferred are the alkenols having 3 to 6 carbon atoms, the monoesters of unsaturated monocarboxylic acids having 3 to 8 carbon atoms and dihydric alcohols having 2 to 12 carbon atoms, and the phenols having alkenyl side chain groups. More preferred are monoesters of (meth)acrylic acids with ethylene glycol, propylene glycol, or butylene glycol; allyl alcohol; and hydroxy $\alpha$-methyl styrene. Particularly preferred is 2-hydroxy ethyl (meth)acrylate.

Furthermore, though the molecular weight of (e) is not particularly limited, it is preferably not more than 1000, particularly preferably not more than 500.

The polyisocyanate (f) is a compound having at least two isocyanate groups, and examples of the same include aromatic polyisocyanates, aliphatic polyisocyanates, alicyclic polyisocyanates, araliphatic polyisocyanates, modification products of these polyisocyanates (modification products having an urethane group, a carbodiimido group, an allophanate group, an urea group, a biuret group, an isocyanurate group, or an oxazolidon group), and mixtures of two or more of these.

Examples of the aromatic polyisocyanates include aromatic diisocyanates having 6 to 16 carbon atoms (excluding those contained in NCO groups; this applies to the polyisocyanates mentioned below), aromatic triisocyanates having 6 to 20 carbon atoms, crude products of these isocyanates. More specifically, the examples include 1,3- and 1,4-phenylene diisocyanates, 2,4- and/or 2,6-tolylene diisocyanates (TDI), crude TDI, 2,4'- and/or 4,4'-diphenyl methane diisocyanate (MDI), crude MDI [products of crude diaminodiphenyl methane with phosgene where the crude diaminodiphenyl methane is a condensation product of formaldehyde with aromatic amine (aniline) or a mixture of the same; or is a mixture of diaminodiphenyl methane and a small amount (e.g., 5 to 20 mass%) of a polyamine having three or more functional groups; polyallyl polyisocyanate (PAPI)], naphthylene-1,5-diisocyanate, triphenyl methane-4,4',4"-triisocyanate.

Examples of aliphatic polyisocyanates include aliphatic diisocyanates having 2 to 18 carbon atoms. More specifically, the examples include 1,6-hexamethylene diisocyanate, 2,2,4-trimethylhexamethylene diisocyanate, lysine diisocyanate.

Examples of alicyclic polyisocyanates include alicyclic diisocyanates having 4 to 16 carbon atoms. More specifically, the examples include isophorone diisocyanate, 4,4-dicyclohexyl methane diisocyanate, 1,4-cyclohexane diisocyanate, norbornane diisocyanate.

Examples of araliphatic isocyanates include araliphatic diisocyanates having 8 to 15 carbon atoms. More specifically, the examples include xylylene diisocyanate, $\alpha,\alpha,\alpha',\alpha'$-tetramethyl xylylene diisocyanate.

Examples of modified polyisocyanates include urethane-modified MDI, carbodiimide-modified MDI, sucrose-modified TDI, castor oil-modified MDI.

Among these, aromatic diisocyanates are preferred, and 2,4- and/or 2,6-TDI is more preferred.

The nitrogen-containing bond of the reactive dispersant (D1) is generated by reaction of the isocyanate group with an active hydrogen-containing group. In the case where the active hydrogen-containing group is a hydroxy group, an urethane bond is generated principally, while in the case where it is an amino group, an urea bond is generated principally. An amide bond is generated in the case of a carboxyl group, while a thiourethane group is generated in the case of a SH group. In addition to these groups, another bond, for instance, a biuret bond, an allophanate bond, may be generated.

These nitrogen-containing bonds are generally classified into two kinds; those generated by reaction of a hydroxy group of the saturated polyol (a) with an isocyanate group of the polyisocyanate (f); and those generated by reaction of an active hydrogen-containing group of the unsaturated monofunctional active hydrogen compound (e) with an isocyanate group of (f).

From a viewpoint of the dispersion stability of the polymer polyol, an average of the number of the hydroxy groups in one molecule of (D1) is usually not less than 2, preferably 2.5 to 10, more preferably 3 to 6. An average of the number of the unsaturated groups in one molecule of (D1) is preferably 0.8 to 2, more preferably 0.9 to 1.2.

Furthermore, from the viewpoint of the dispersion stability, a hydroxyl equivalent of (D1) is preferably 500 to 10000, more preferably 1000 to 7000, particularly preferably 2000 to 6000.

Furthermore, (D1) preferably has a viscosity of 10000 to 50000 mPa·s /25°C, more preferably 15000 to 35000 mPa·s /25°C. In the case where the viscosity is in the foregoing range, the polymer has better dispersibility, thereby causing the polymer polyol obtained with use of (D1) to have a lower viscosity and providing more ease of handling.

The method for producing the reactive dispersant (D1) by employing these materials is not particularly limited.

Examples of preferable methods include a method of adding a polyisocyanate (f) to a mixture of an unsaturated monofunctional active hydrogen compound (e) and a substantially saturated polyol (a) and reacting the same in the presence of a catalyst as needed, and a method of reacting (e) and (f) in the presence of a catalyst as needed to produce an unsaturated compound having an isocyanate group and reacting the same with (a). The latter method is most preferred since the method provides an unsaturated polyol having a nitrogen-containing bond, from which a minimum of by-products such as compounds having no hydroxy group are generated.

Alternatively, (D1) may be formed by a method in which, in place of (e) or (a), a precursor of the same is reacted with (f) and thereafter the precursor portion is modified [e.g., after reacting the aforementioned precursor with isocyanate, the obtained reaction product is reacted with an unsaturated monocarboxylic acid or an ester-forming derivative of the same so as to introduce an unsaturated group, or after reacting the aforementioned precursor with isocyanate, the obtained reaction product is coupled using alkylene dihalide, or dicarboxylic acid, so as to form (D1)].

Examples of the catalyst for the foregoing reaction include conventionally used urethane catalysts such as tin-based catalysts (dibutyltin dilaurate, stannous octoate), other metal-based catalysts (tetrabutyl titanate), amine-based catalyst (triethylene diamine). Among these, tetrabutyl titanate is preferred.

An amount of the catalyst is preferably 0.0001 to 5 mass%, more preferably 0.001 to 3 mass%, based on the mass of a reaction mixture.

As to the reaction ratio of these three components, an equivalent ratio of the active hydrogen-containing groups of (e) and (a) to the isocyanate groups of (f) is preferably (1.2 to 4):1, more preferably (1.5 to 3):1 based on a total amount of the components used in the reaction.

Furthermore, an amount of (e) used in the reaction is preferably less than 2 parts by mass (mass parts), more preferably 0.5 to 1.8 mass parts, with respect to 100 mass parts of (a).

The reactive dispersant (D1) obtained by the foregoing methods may be a single compound, but in many cases it is a mixture of various compounds such as those expressed by a general formula [5] shown below:

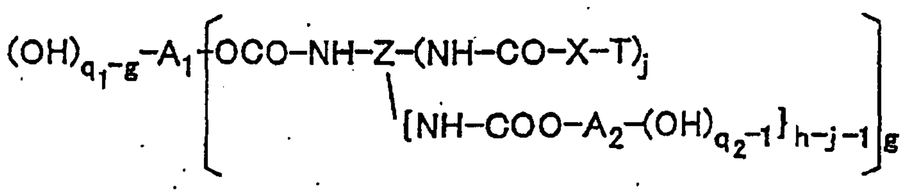

[5]

where:

z represents a residue of (f) having a valence of h (h is an integer of not less than 2);
T represents a residue of (e) (having a polymerizable unsaturated group);
$A_1$ represents a residue of a polyol having a valence of $q_1$ [OH prepolymer derived from (a), or (a) and (f)], and $A_2$ represents a residue of a polyol having a valence of $q_2$ [OH prepolymer derived from (a), or (a) and (f)] ($q_1$ and $q_2$ are integers of not less than 2); and
X represents a single bond, O, S, or

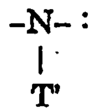

where:

T' represents H or an alkyl group having 1 to 12 carbon atoms;
g represents an integer of not less than 1;
j represents an integer of not less than 1;
$q_1$-g $\geq$ 0;
h-j-1 $\geq$ 0; and
the total number of OH groups is not less than 2.

In other words, the reactive dispersant (D1) includes one polyol (a) and one compound (e) that are bonded with each other via one polyisocyanate (f), a plurality of compounds (e) and one polyol (a) that are bonded with each other via one polyisocyanate (f) for each (e), polyols (a) and compounds (e), not less than three in total, that are bonded with each other via a plurality of polyisocyanates (f). Furthermore, in addition to these, a plurality of polyols (a) bonded with each other via polyisocyanates (f) (a polyol having no unsaturated group, which contains a nitrogen-containing bond) and a plurality of compounds (e) bonded with each other via polyisocyanates (f) (an unsaturated compound having no hydroxyl group, which contains a nitrogen-containing bond) may be formed as by-products, and also, the reactive dispersant (D1) may contain unreacted (a) and (e) in some cases.

These mixtures may be used as dispersants without any modification, but those containing a minimum of polyols having no unsaturated group, which contain a nitrogen-containing bond, or unsaturated compounds having no hydroxyl group, which contain a nitrogen-containing bond, are preferred, and they may be used after removing the impurities that are removable.

Furthermore, since unsaturated groups in (D1) are present at terminals or in the vicinity of terminals of molecular chains of the polyol, they are copolymerizable with monomers.

A dispersant (D11) used in the third and sixth Items and in the present invention is obtained by reacting (a), (e), and (f) so that K, indicative of an average of a ratio of the number of unsaturated groups to the number of nitrogen-containing bonds originating from NCO groups in one molecule of (f), which is derived according to a formula (4), is 0.1 to 0.4. In the present invention said ratio K is 0.1 to 0.3.

$$K = [\text{number of moles of (e)} \times \text{number of unsaturated groups of (e)}] / [\text{number of moles of (f)} \times \text{number of NCO groups of (f)}] \quad \ldots\ldots (4)$$

The value of K is more preferably 0.1 to 0.3, particularly preferably 0.2 to 0.3. In the case where the value of K is in the foregoing range, a particularly excellent dispersion stability of polymer polyol can be obtained.

As to the composition ratio of a polyol (A) and a reactive dispersant (D1) when a polymer polyol is formed, 0.5 to 50 mass parts of (D1) is preferably used with respect to 100 mass parts of (A) [Second and Fifth Items 1. More preferably 0.8 to 15 mass parts, or particularly preferably 1 to 10 parts, of (D1) is used with respect to 100 parts of (A). With not more than 50 mass parts of (D1), the viscosity of the polymer polyol does not increase, while with not less than 0.5 mass parts, an excellent dispersibility is obtained.

In the case of (D11), since it is excellent in dispersion stability, the ratio of use of the same can be varied in a wide range [for instance, 0.1 to 80 mass parts with respect to 100 mass parts of (A)], but the ratio is preferably in the foregoing range.

The reactive dispersants (D1) and (D11) of the second, third, fifth, and sixth. Items can be used for producing conventional polymer polyol compositions in which only (b2) is used as an ethylenically unsaturated compound, since a polymer polyol composition obtained by using the dispersant (D1) or (D11) has excellent dispersion stability. However, these dispersants are particularly preferably used for production of a polymer polyol composition in which a specific ethylenically unsaturated group-containing compound (b1) is used according to the first and fourth. Items.

As the radical polymerization initiator used for polymerizing (b), compounds that form a free radical to initiate polymerization may be used. Examples of the compounds include azo compounds, such as 2,2'-azobisisobutyronitrile, 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methyl propionate), 2,2'-azobis[2-(hydroxymethyl)propionitrile] and

1,1'-azobis(1-acetoxy-1-phenylethane); organic peroxides such as dibenzoyl peroxide, dicumyl peroxide, bis(4-t-butylcyclohexyl) peroxidicarbonate, benzoyl peroxide, lauroyl peroxide and persuccinic acid; and inorganic peroxides, such as persulfate and perborate. Combinations of two or more thereof also may be used.

The amount of the radical polymerization initiator used is usually from 0.05 to 20 mass %, preferably from 0.1 to 15 mass %, particularly preferably from 0.2 to 10 mass %, based on the amount of (b) used. When the amount of the polymerization initiator used is from 0.05 to 20 mass %, the polymerization degree of (b) in the polymer polyol is sufficiently high, and also the molecular weight is high. Thus, it is excellent in that a polyurethane foam having a sufficient compressive hardness can be obtained.

Examples of the polymerization initiator used in the polymerization methods other than radical polymerization are as follows. In the coordinated anionic polymerization, an initiator composed of an organic alkyl compound of the metals of I, II and III groups in the periodic table in combination with a salt of the metals of IV to VII groups can be used. Furthermore, in the metathesis polymerization, an initiator composed of $WCl_6$ or $MoCl_5$ in combination with an organic aluminum can be used.

Examples of the diluent (C) used in the radical polymerization include: aromatic hydrocarbon-based solvents such as toluene and xylene; saturated aliphatic hydrocarbon-based solvents having 5 to 15 carbon atoms such as hexane and heptane; unsaturated aliphatic hydrocarbon-based solvents having 5 to 30 carbon atoms such as octene, nonene, and decene; alcohol-based solvents such as methanol, isopropanol, and n-butanol; ether-based solvents such as dioxane; ester-based solvents such as ethyl acetate; nitrile-based solvents such as acetonitrile; and amide-based solvents such as N,N-dimethylformamide and N, N-dimethylacetoamide. Preferred as (C) are aromatic hydrocarbon-based solvents since the obtained polymer polyol compositions have lower viscosities. More preferred is xylene.

The amount of the diluent used is preferably from 0 to 50 mass %, more preferably from 1 to 40 mass%, based on the amount of (b) used.

The (C) used is preferably removed therefrom by vacuum stripping after polymerization, or alternatively (C) may be caused to remain in the polymer polyol composition (I) or may be added anew, as needed, so that the (I) has a further reduced viscosity. Examples of (C) to be contained in the (I) include: the aforementioned unsaturated aliphatic hydrocarbon-based solvents; aromatic solvents; and fire retardants having a low viscosity (not more than 100 mPa·s /25°C), for instance, tris(chloroethyl)phosphate, tris(chloropropyl)phosphate.

The content of the (C) in the (I) is preferably not more than 3 mass%, more preferably not more than 2 mass%, particularly preferably not more than 1 mass%.

Examples of the chain transfer agent include alkylmercaptans, such as dodecylmercaptan and mercaptoethanol; alcohols, such as isopropyl alcohol, methanol, 2-butanol and allyl alcohol halogenated hydrocarbons, such as carbon tetrachloride, carbon tetrabromide and chloroform.

The amount of the chain transfer agent used is usually from 0 to 2 mass % based on the amount of (b) used.

The content of the polymer particles (B) dispersed in (A) in the polymer polyol composition according to any one of the first through third inventions is preferably from 35 to 75 mass %, more preferably from 45 to 75 mass %. If the content of (B) is not less than 35 mass %, a foam having a sufficient compressive hardness can be obtained. Furthermore, the content of (B) is preferably not more than 75 mass %, since it prevents the polymer particles from aggregating and settling, thereby making it possible to provide a polymer polyol with excellent handling properties.

In the polymer polyol composition (I) of any one of the first through third inventions obtained by the methods of the fourth through six inventions, respectively, the amount of the soluble polymers (P) dissolved in the polyol (A) can be not more than 5 mass % based on the mass of (A), in the case where the content of (B) is 35 mass% to 75 mass% based on the mass of (I). The amount of (P) is preferably not more than 3 mass %. If the amount of (P) does not exceed 5 mass %, the polymer polyol composition has a low viscosity, thereby being easy to handle, and allowing a foam obtained therefrom to have a high hardness. In the case of a polymer polyol composition (I) obtained using the dispersant (D), the content of (P) is preferably not more than 5 mass%, but may be not more than 10 mass%.

The soluble polymers (P) dissolved in the polyol (A) herein refer to the soluble polymers obtained by removing the polymer particles (B) insoluble in (A) as well as (A) (containing small amounts of by-products of low molecular weight) from the polymer polyol composition (I), and they are usually compounds having a higher molecular weight than the polyol (A).

The content of the polymer particles (B) and the amount of the soluble polymers (P) are measured as follows.

20 g of methanol is added to 5 g of (I) and put in a stainless tube of 100 cc. The polymer particles (B) are allowed to aggregate by a centrifugation at 18,000 rpm for 60 minutes at a temperature of 20 °C to obtain a transparent supernatant. Let a ratio (%) of the mass of the obtained (B) to (I) be the content of (B). From this solution, methanol is removed by a pressure-reducing dryer, and then the polyol (A) (containing small amounts of by-products of low molecular weight) and the polymers (P) soluble in (A) [ (P) has a weight-average molecular weight of at least 4000; in chromatography, the peak of (P) usually appears on the side of a higher molecular weight than the peak of (A)] are sampled by preparative liquid chromatography. The amount of (P) is determined from the mass ratio of the sampled (A) and (P). The soluble polymers (P) usually have a weight-average molecular weight (measured by GPC) of 6000 to 30000, however, they may include those having a higher molecular weight.

When the soluble polymers (P) cannot be separated from the polyol (A) by preparative liquid chromatography (when the molecular weights of (P) and (A) overlap), the polymer particles (B) are allowed to aggregate by a centrifugation in the same way as the above to obtain a transparent supernatant. From this solution, methanol is removed by a pressure-reducing dryer, and then diethyl ether is added. The resulting precipitate is filtered and dried. As a result, the soluble polymers (P) can be separated from (A).

Furthermore, in the case where the content of (B) is 35 mass% to 75 mass% based on the mass of (I), the polymer polyol composition (I) of any one of the first through third Items obtained by the methods of the fourth through sixth Items, respectively, can be made to be a polymer polyol composition having a viscosity V (mPa•s) measured by a Brookfield viscosimeter at 25 °C in a range satisfying an inequality (1) below, or preferably in a range satisfying both inequalities (2) and (3) below:

$$V \leq (Va - Va \times C/10)\hat{}\,[e\hat{}\,x], \quad (1)$$

$$V \leq (Va - Va \times C/10)\hat{}\,[e\hat{}\,y], \quad (2)$$

$$V \geq 0.5\times(Va - Va \times C/10)\hat{}\,[e\hat{}\,y], \quad (3)$$

where

$$x = 0.0010354 \times Bp\hat{}\,1.5,$$

$$y = 0.0009514 \times Bp\hat{}\,1.5,$$

Va is a viscosity (mPa•s) of (A) measured by a Brookfield viscosimeter at 25°C,
C is a content of (C) in (I) (mass %),
Bp is a content of (B) in (I) (mass %),
symbol^ indicates a power, and
symbol "e" is the base of the natural logarithm.

The conditions of the measurements of V and Va are as follows:

| | | |
|---|---|---|
| 1,500 mPa•s or less; | Rotor No. 3, | 60 rpm |
| 1,500 to 3,000 mPa•s; | Rotor No. 3, | 30 rpm |
| 3,000 to 8,000 mPa•s; | Rotor No. 3, | 12 rpm |
| 8,000 to 16,000 mPa•s; | Rotor No. 3, | 6 rpm |
| 16,000 to 40,000 mPa•s; | Rotor No. 4, | 12 rpm, and |
| 40,000 to 100,000 mPa•s; | Rotor No. 4, | 6 rpm. |

In the range of the inequality (1), the polymer polyol composition (I) can have good miscibility with other materials and also good handling properties.

The seventh Item is a method for producing a polyurethane resin using any of the polymer polyol compositions (I) of the first through third Items at least in a portion of a polyol component.

In the method for producing a polyurethane resin by reacting a polyol component with a polyisocyanate component in the presence of a blowing agent, a catalyst, a foam stabilizer and other additives as needed, the polymer polyol compositions of the present invention can be used in combination with known other active hydrogen atom-containing compounds, if necessary, as a polyol component. As the other active hydrogen atom-containing compound, other types of high molecular polyols or monools (T) and low-molecular active hydrogen atom-containing compounds (U) normally used in the production of polyurethane can be used.

As the other types of high molecular polyols or monools (T), polyether polyols, polyester polyols, and the other various types of polyols and monools; and mixtures thereof can be used.

The polyether polyols include those exemplified above for the polyol (A1).

The polyester polyols include polyester polyols mentioned above as examples of (A2).

Examples of the other various types of polyols or monools include: diene-type polyols such as polybutadiene polyol, and hydrogen-added products of the same; hydroxyl group-containing vinyl polymers such as acryl-base polyols; polyols based on natural oils such as castor oil; modification products of natural oil-based polyols; terminal radical-polymerizable-functional group-containing active hydrogen compounds (including monools) disclosed in EP 1 006 133; polymer polyols other than those specifically mentioned in the present specification.

These other types of high-molecular polyols or monools (T) preferably have from 2 to 8 hydroxyl groups, further preferably from 3 to 8 hydroxyl groups; and usually have a hydroxyl equivalent of not less than 200, preferably 300 to 4000, more preferably 400 to 3000.

The polyether polyols are particularly preferred.

As the low-molecular active hydrogen atom-containing compounds (U), compounds having at least two (preferably from 2 to 3, more preferably 2) active hydrogen atoms (hydroxyl group, amino group, mercapto group, preferably hydroxyl group) and having an equivalent of less than 200 (preferably from 30 to 180) per one active hydrogen atom. The compound (U) preferably has a molecular weight of not more than 500, more preferably from 60 to 400.

Examples of the compound (U) include low-molecular polyols and amino alcohols.

The low-molecular polyols include dihydric alcohols, such as ethylene glycol, diethylene glycol, propylene glycol, dipropylene glycol, 1,4-butanediol, neopentyl glycol and hexane diol; polyhydric alcohols having 3 to 8 or more hydroxyl groups, such as glycerol, tritmethylolpropane, pentaerythritol, diglycerol, $\alpha$-methylglucoside, sorbitol, xylytol, mannitol, dipentaerythritol, glucose, fructose and sucrose; alkylene oxide adducts of polyhydric alcohols, having a low molecular weight (e.g. molecular weight of 200 to 400), e.g. polyethylene glycol and polypropylene glycol; and low-molecular diols having a ring structure, e.g. propylene oxide adducts of bisphenol A.

The amino alcohols include mono- or di-alkanol amines (e.g. monoethanol amine, diethanol amine, monopropanol amine.

Among these preferred are the low-molecular polyols, particularly diols. Specific examples are ethylene glycol, 1,4-butanediol, neopentyl glycol, 1,6-hexanediol, and mixtures of two or more thereof.

The amount of the polymer polyol composition (I) of the present invention in the polyol component (Z) [(I), and as needed (T) and/or (U)] used in the method for producing a polyurethane resin is preferably at least 5 mass %, more preferably at least 10 mass %, particularly preferably at least 20 mass %. When the amount of (I) is not less than 5 mass %, a desired compressive hardness of a polyurethane foam can be obtained easily.

The content of (B) in (Z) is preferably from 5 to 75 mass %, more preferably from 7 to 65 mass %. In the case where the amount is in the foregoing range, excellent foam hardness and excellent flowability of the foam forming material mixture can be obtained.

Furthermore, it is preferable that the content of (T) is from 0 to 95 mass %, more preferably from 0 to 80 mass %. When the content of (T) is not more than 95 mass %, a desired compressive strength of a polyurethane foam can be obtained easily.

It is preferable that the content of (U) is from 0 to 30 mass %, more preferably from 0 to 10 mass %. When the content of (U) is not more than 30 mass %, the temperature of the developed heat at the time of reaction does not become too high, so that the risk of scorching is eliminated.

As the polyisocyanate component used when producing a polyurethane resin of the seventh Item and of the present invention, known organic polyisocyanates traditionally used for producing polyurethane resins can be employed.

Such polyisocyanates include those mentioned above as examples of the polyisocyanate (f).

Among these preferred are 2,4- and 2,6-TDI, mixtures of isomers thereof, and crude TDI; 4,4'- and 2,4'-MDI, mixtures of isomers thereof, and crude MDI; and modified polyisocyanates derived from these polyisocyates and containing an urethane group, carbodiimide group, allophanate group, urea group, biuret group or isocyanurate group.

The isocyanate index [equivalent ratio of (NCO groups/active hydrogen atom-containing groups) x 100] when producing a polyurethane resin is usually from 80 to 140, preferably from 85 to 120, more preferably from 95 to 115. Furthermore, the isocyanate index also can be considerably higher than the above range (e.g. from 300 to 1000) to incorporate a polyisocyanate group in the polyurethane.

When producing a polyurethane resin, a catalyst normally used in a polyurethane-forming reaction may be used to accelerate the reaction. For example, amine-based catalysts (e.g. tertiary amines such as triethylenediamine and N-ethylmorpholine; 1,8-diaza-bicyclo[5.4.0]undecene-7 ("DBU" produced by San-Apro Ltd.)), tin-based catalysts (e.g. stannous octoate, dibutyl tin dilaurate), other metal catalysts (e.g. lead octoate), and isocyanurating catalysts disclosed in USP 4,299,924 may be employed. Among these, preferred are amine-based catalysts and/or tin-based catalysts.

The amount of the catalyst, if used, is preferably from 0.001 to 5 mass %, based on the mass of the reaction mixture.

In the method of the present invention, the polyurethane reaction may be carried out in the presence of a normally used blowing agent as needed, so that a polyurethane foam (preferably having a foaming rate of 5 to 100) is obtained.

As the blowing agent, at least one selected from hydrogen atom-containing halogenated hydrocarbons, water, low boiling point hydrocarbons, liquefied carbon dioxide may be used.

Specific examples of the hydrogen atom-containing halogenated hydrocarbons are those of HCFC (hydrochlorofluorocarbon) type (e.g. HCFC-123, HCFC-141b, HCFC-22 and HCFC-142b); those of HFC (hydrofluorocarbon) type (e.g. HFC-134a, HFC-152a, HFC-356mff, HFC-236ea, HFC-245ca, HFC-245fa and HFC-365mfc).

Among these, preferred are HCFC-141b, HFC-134a, HFC-356mff, HFC-236ea, HFC-245ca, HFC-245fa and HFC-365mfc, and combinations of two or more thereof.

The low boiling point hydrocarbons usually have a boiling point of -5 to 70 °C. Specific examples thereof include butane, pentane, cyclopentane, and mixtures thereof.

When a hydrogen atom-containing halogenated hydrocarbon compound is used, the amount used is usually not more than 50 mass parts, preferably from 5 to 45 mass parts, with respect to 100 mass parts of the total polyol component (Z).

When a low boiling point hydrocarbon is used, the amount used is usually not more than 45 mass parts, preferably from 5 to 40 mass parts, with respect to 100 mass parts of (Z).

When liquefied carbon dioxide is used, the amount used is usually not more than 30 mass parts, preferably from 5 to 25 mass parts, with respect to 100 mass parts of (Z).

When a combination of a hydrogen atom-containing halogenated hydrocarbon and water is used, the amount of the hydrogen atom-containing halogenated hydrocarbon used is usually not more than 45 mass parts, preferably from 5 to 40 mass parts, with respect to 100 mass parts of (Z), and the amount of water used is usually not more than 10 mass parts, preferably from 0.5 to 8 mass parts, with respect to 100 mass parts of (Z).

When a combination of a low boiling point hydrocarbon and water is used, the amount of the low boiling point hydrocarbon used is usually not more than 40 mass parts, preferably from 2 to 35 mass parts, with respect to 100 mass parts of (Z), and the amount of water used is usually not more than 10 mass parts, preferably from 0.5 to 8 mass parts, with respect to 100 mass parts of (Z).

When a combination of liquefied carbon dioxide and water is used, the amount of the liquefied carbon dioxide used is usually not more than 25 mass parts, preferably from 0.1 to 20 mass parts, with respect to 100 mass parts of (Z), and the amount of water used is usually not more than 10 mass parts, preferably from 0.5 to 8 mass parts, with respect to 100 mass parts of (Z).

When water alone is used as the blowing agent, the amount of water used is usually from 0.1 to 30 mass parts, preferably from 1 to 20 mass parts, with respect to 100 mass parts of (Z).

In the method of the present invention for producing polyurethane resins and foams of the same, if necessary, the reaction may be carried out in the presence of a foam stabilizer or other additive, such as those described below.

For example, the reaction can be carried out in the presence of a known additive, such as a foam stabilizer (based on dimethyl siloxane, polyether modified dimethyl siloxane), a coloring agent (dyes, pigments, carbon black), a plasticizer (phthalic acid esters, adipic acid esters), an organic filler (synthetic staple fibers, hollow microsphere composed of a thermoplastic or thermosetting resin), an inorganic filler [inorganic salts (calcium carbonate, barium sulfate), inorganic fibers (glass fibers, carbon fibers), whiskers (potassium titanate whisker)], a flame retardant (phosphoric acid esters, halogenated phosphoric acid esters, melamines, phosphazene derivatives), an age retardant (based on triazole, benzophenone), an antioxidant (based on hindered phenol, hindered amine ), an adhesive (modified polycaprolactone polyol), an internal mold release agent, an antibacterial agent.

The amounts of these additives used with respect to 100 mass parts of the polyol component (Z) are as follows. The amount of the foam stabilizer used is preferably not more than 10 mass parts, more preferably from 0.2 to 5 mass parts. The amount of the coloring agent used is preferably not more than 1 mass parts. The amount of the plasticizer used is preferably not more than 10 mass parts, more preferably not more than 5 mass parts. The amount of the organic filler used is preferably not more than 50 mass parts, more preferably not more than 30 mass parts. The amount of the inorganic filler used is preferably not more than 50 mass parts, more preferably not more than 30 mass parts. The amount of the flame retardant used is preferably not more than 20 mass parts, more preferably from 5 to 15 mass parts. The amount of the age retardant used is preferably not more than 1 mass parts, more preferably from 0.01 to 0.5 mass parts. The amount of the antioxidant used is preferably not more than 1 mass parts, more preferably from 0.01 to 0.5 mass parts. Among the aforementioned additives, the amount of the additives other than these is preferably not more than 1 mass part.

Production of a polyurethane resin can be carried out by conventional methods, for example, one shot method, semiprepolymer method, prepolymer method.

In the production of a polyurethane resin, normally used production devices can be employed. When no solvent is used, for example, a device such as a kneader or extruder can be employed. For example, various types of non-foamed or foamed polyurethane resins can be produced within a closed or open mold. A packing rate [(density on mold foaming / density on free foaming)x100] in the case where a foamed polyurethane resin is produced using a closed mold is preferably 110 to 200 %.

In the production of a polyurethane resin, usually the materials are mixed and reacted using a mechanical device at a low pressure or high pressure. Furthermore, in the production of a polyurethane resin, the air dissolved in the materials or a gas such as air intermixed at the time of mixing can be removed by a vacuum method before or after mixing the raw materials (particularly before mixing the raw materials).

The polymer polyols obtained by the methods of the present invention are useful for producing polyurethane foams, particularly flexible molded foams and slabstock foams. Furthermore, the polymer polyols also can be used for molding by the RIM (reaction injection molding) method.

The polyurethane resin produced using the polymer polyol composition of the present invention is employed as, for instance, polyurethane foams used in interiors of cars, and interior fittings such as furniture. Furthermore, they

are used as materials for sealants, synthetic leather.

EXAMPLES

The present invention is described further in detail with reference to the following examples 6-8. However, the present invention is not limited to these examples in any way. In the following, the values of parts, percentage, and ratio indicate those of mass parts, mass percentage, and mass ratio, respectively.

Compositions etc. of materials used in Preparation Examples, expressed by abbreviations, are as follows.

(1) Unsaturated monofunctional active hydrogen compound (e)

HEMA:2-hydroxy ethyl methacrylate;
HEA: 2-hydroxy ethyl acrylate,

(2) Reactive dispersant-producing catalyst

TBT tetrabutyl titanate [manufactured by NACALAI TESQUE, INC.]

(3) Reactive dispersant-producing polyisocyanate (f)

TDI: "CORONATE T-80" [manufactured by NIPPON POLYURETHANE INDUSTRY CO., LTD.]

(4) Polyol (a)

Polyol (a-1): polyol obtained by adding 104 moles in average of PO to pentaerythritol and subsequently adding 19 moles in average of EO, the polyol having a content of EO of 12% and a hydroxyl value of 32.

[Preparation Example 1] Production of a reactive dispersant (D1) - I

Into a four-neck flask of 600-milliliter-volume equipped with a thermoregulator, a mixing blade, and a dropping funnel, 28 parts (0.16 mole) of TDI and 0.01 part of TBT was added, and cooled at 30 °C, and subsequently 9 parts (0.07 mole) of HEMA were dropped over 2 hours, while the reaction temperature was maintained at 40 to 50°C. Then, the reaction liquid was put into 963 parts (0.14 mole) of a polyol (a-1) in a four-neck flask of 1 liter volume equipped with a thermoregulator, a mixing blade, and a dropping funnel, and stirred for 4 hours at a reaction temperature of 80 to 90°C. It was confirmed by infrared absorption spectrum that no unreacted isocyanate group was present, and a reactive dispersant (D1-1) was obtained.

(D1-1) had a hydroxyl value of 20 and a viscosity of 20000 mPa·s /25°C, and a ratio of the number of unsaturated groups to the number of nitrogen-containing bonds was 0.22.

[Preparation Example 2] Production of a reactive dispersant (D1) - 2

A reactive dispersant (D1-2) was obtained in the same manner as that of Preparation Example 1 except that 8 parts (0.07 mole) of HEA was used in place of 9 parts of HEMA, and that 964 parts (0.14 mole) of the polyol (a-1) was used in place of 963 parts of the same.

(D1-2) had a hydroxyl value of 20 and a viscosity of 19500 mPa·s /25°C, and a ratio of the number of unsaturated groups to the number of nitrogen-containing bonds was 0.22.

The compositions, symbols, etc. of the materials used in the examples and comparative examples described below are as follows:

(5) Polyol (A)

G50: a polyol obtained by adding on average 50 moles of PO to glycerol, and having a number-average molecular weight (hereinafter referred to as Mn) of 3,000, a hydroxyl value of 56, and a viscosity of 500 mPa·s (25°C).

(6) Ethylenically unsaturated compound (b2)

AN: acrylonitrile
St: styrene

(7) Dispersant (D)

SAN: acrylonitrilelstyrene = 80/20 mass % copolymer (Mn = 5,000)
GMAP: equimolar glycidyl methacrylate adducts of polypropylene glycol (Mn = 3,000)

Reactive dispersant (D1-1): dispersant produced in Preparation

Example 1

Reactive dispersant (D1-2): dispersant produced in Preparation

Example 2

(8) Polymerization initiator

AVN: 2,2'-azobis(2,4-dimethylvaleronitrile)

(9) Organic polyisocyanate

TDI-80: "MILLIONATE T-80" [manufactured by NIPPON POLYURETHANE INDUSTRY CO., LTD.]

(10) Catalyst

Catalyst A: "Neostann U-28" (stannous octoate) [manufactured by NITTO KASEI CO., LTD.]
Catalyst B: "DABCO" (triethylenediamine) [manufactured by NIPPON NYUKAZAI CO, LTD.]
TBT: tetrabutyl titanate

(11) Foam Stabilizer

"F-242T": polyether siloxane polymer [manufactured by Shin-Etsu Silicone Co., Ltd.]

Furthermore, the number-average molecular weight, unsaturation degree, viscosity, polyol-soluble polymer, and dispersion stability were measured as follows.

[Mn]

Machine type: HLC-8120GPC (liquid chromatograph manufactured by TOSOH CORPORATION)

| | |
|---|---|
| Columns: | TSK gel Super H4000<br>+TSK gel Super H3000<br>+TSK gel Super H2000<br>(all are manufactered by TOSOH CORPORATION) |
| Column temperature: | 40 °C |
| Detector: | RI (Refractive Index) |

(continued)

| | |
|---|---|
| Solvent: | tetrahydrofuran |
| Flow rate: | 0.6 ml/min |
| Concentration of sample: | 0.25 mass % |
| Injected amount: | 10 μl |
| Standard: | polystyrene (manufactured by TOSOH CORPORATION; TSK STANDARD POLYSTYRENE) |

[Unsaturation Degree]

Unsaturation degree was measured in accordance with the method specified in JIS K-1557.

[Viscosity]

Machine type: BL-type viscosimeter (manufactured by TOKIMEC INC.)
Measurement temperature: 25 °C
Rotor No.: No. 3 or No. 4
Rotation count: According to the rotation count described above with respect to the measurement of viscosity in the description of the inequality (1) concerning the viscosity of V(mPa·s).

[Polyol-Soluble Polymer]

Polyol-soluble polymer was measured according to the above-described method. However, in preparative liquid chromatography, the following conditions were used.

Machine type: LC-09 (manufactured by NIHON BUNSEKIKOGYO CO., LTD.)

| | |
|---|---|
| Columns: | JAIGEL-1H<br>+JAIGEL-2H<br>+ JAIGEL-3H |
| (All are manufactured by NIHON BUNSEKIKOGYO CO., LTD.) | |
| Column temperature: | 40 °C |
| Detector: | RI |
| Solvent: | chloroform |
| Flow rate: | 2.5 ml/min |
| Concentration of sample: | 0.25 mass % |
| Injected amount: | 4 ml × 12 times |

[Dispersion Stability -1]

A polymer polyol composition was put into a sealed 140 ml-volume container made of glass (sample bottle), and allowed to stand in a thermostat at 50 °C for 30 days.

Thereafter, dispersion stability was estimated visually.

Standard of Evaluation

○: There was no sediment, and dispersion was uniform.
Δ: There was a sediment, but it was redispersed uniformly after tipping the sample bottle down five times.
×: There was a sediment, and it was not redispersed after tipping the sample bottle down five times.

[Dispersion Stability -2]

A polymer polyol composition was put into a sealed 140 ml-volume container made of glass (sample bottle), and allowed to stand in a thermostat at 70 °C for 30 days.
Thereafter, dispersion stability was estimated visually.

Standard of Evaluation

○: There was no sediment, and dispersion was uniform.
Δ: There was a sediment, but it was redispersed uniformly after tipping the sample bottle down five times.
×: There was a sediment, and it was not redispersed after tipping the sample bottle down five times.

The following Examples 6 to 8 relate to the claimed invention.

[Example 1] Production of a polymer polyol composition- 1

Into a four-neck flask equipped with a thermoregulator, a vacuum mixing blade, a dropping pump, a pressure reducing device, a Dimroth condenser, and an inlet and an outlet for nitrogen, 10 parts of SAN and 440 parts of G50 were added, and after substituting nitrogen for the air in the flask, heated at 130 °C in the nitrogen atmosphere while stirring (until the polymerization was completed). Then, a material previously prepared by mixing 250 parts of a 2.2-mole propylene oxide adduct of allyl alcohol (Mn = 186, SP = 10.2), 150 parts of AN, and 100 parts of St, and a material previously prepared by mixing 50 parts of G50 and 1 part of AVN were dropped continuously over 1 hour using dropping pumps simultaneously, and polymerization was carried out for 2 hours at 130°C. Furthermore, unreacted monomers were removed by stripping under reduced pressure. Thus, a polymer polyol composition (F-1) having a content of polymer particles of 50 % and a viscosity of 4000 mPa•s (25 °C) was obtained.

[Example 2] Production of a polymer polyol composition- 2

Into a four-neck flask identical to that used in Example 1, 10 parts of SAN and 440 parts of G50 were added, and after substituting nitrogen for the air in the flask, heated at 130 °C in the nitrogen atmosphere while stirring (until the polymerization was completed). Then, a material previously prepared by mixing 200 parts of a compound having an acetoacetyl group expressed by a formula [6] shown below (Mn = 215, SP = 11.5), 150 parts ofAN, and 150 parts of St, and a material previously prepared by mixing 50 parts of G50 and 1 part ofAVN were dropped continuously over 1 hour using dropping pumps simultaneously, and polymerization was carried out for 2 hours at 130°C. Furthermore, unreacted monomers were removed by stripping under reduced pressure. Thus, a polymer polyol composition (F-2) having a content of polymer particles of 50 % and a viscosity of 4000 mPa·s (25 °C) was obtained.

$$CH_2 = C(CH_3)COOCH_2CH_2OCOCH_2COCH_3 \qquad [6]$$

[Example 3] Production of a polymer polyol composition - 3

Into a four-neck flask identical to that used in Example 1, 10 parts of SAN and 440 parts of G50 were added, and after substituting nitrogen for the air in the flask, heated at 130 °C in the nitrogen atmosphere while stirring (until the polymerization was completed). Then, a material previously prepared by mixing 50 parts of a compound having a ring-opening lactone chain expressed by a formula [7] shown below (Mn = 300, SP = 10.4), 200 parts of AN, and 250 parts of St, and a material previously prepared by mixing 50 parts of G50 and 1 part ofAVN were dropped continuously over 1 hour using dropping pumps simultaneously, and polymerization was carried out for 2 hours at 130°C. Furthermore, unreacted monomers were removed by stripping under reduced pressure. Thus, a polymer polyol composition (F-3) having a content of polymer particles of 50 % and a viscosity of 4200 mPa· s (25 °C) was obtained.

$$CH_2 = CHCO[O(CH_2)_5CO]_2OH \qquad [7]$$

[Example 4] Production of a polymer polyol composition- 4

Into a four-neck flask identical to that used in Example 1, 10 parts of SAN and 440 parts of G50 were added, and after substituting nitrogen for the air in the flask, heated at 130 °C in the nitrogen atmosphere while stirring (until the polymerization was completed). Then, a material previously prepared by mixing 180 parts of a compound having a succinic acid residue expressed by a formula [8] shown below (Mn = 230, SP = 11.2), 160 parts of AN, and 160 parts of St, and a material previously prepared by mixing 50 parts of G50 and 1 part ofAVN were dropped continuously over 1 hour using dropping pumps simultaneously, and polymerization was carried out for 2 hours at 130°C. Furthermore, unreacted monomers were removed by stripping under reduced pressure. Thus, a polymer polyol composition (F-4) having a content of polymer particles of 50 % and a viscosity of 4900 mPa·s (25 °C) was obtained.

$$CH_2 = C(CH_3)COOCH_2CH_2OCOCH_2CH_2COOH \qquad [8]$$

[Example 5] Production of a polymer polyol composition- 5

Into a four-neck flask identical to that used in Example 1, 10 parts of SAN and 440 parts of G50 were added, and after substituting nitrogen for the air in the flask, heated at 130 °C in the nitrogen atmosphere while stirring (until the polymerization was completed). Then, a material previously prepared by mixing 250 parts of a compound having a phthalic acid residue expressed by a formula [9] shown below (Mn = 336, SP = 12.0), 150 parts of AN, and 100 parts of St, and a material previously prepared by mixing 50 parts of G50 and 1 part ofAVN were dropped continuously over 1 hour using dropping pumps simultaneously, and polymerization was carried out for 2 hours at 130°C. Furthermore, unreacted monomers were removed by stripping under reduced pressure. Thus, a polymer polyol composition (F-5) having a content of polymer particles of 50 % and a viscosity of 5300 mPa·s (25 °C) was obtained.

$$CH_2 = C(CH_3)COOCH_2CH_2OCO(Ph)COOCH_2CH(OH)CH_3 \qquad [9]$$

where (Ph) represents an orthophenylene group.

[Example 6] Production of a polymer polyol composition- 6

A polymer polyol composition (F-6) having a content of polymer particles of 50 % and a viscosity of 3800 mPa·s (25 °C) was obtained in the same manner as that of Example 1 except that 10 parts of the reactive dispersant (D1-1) was used in place of 10 parts of SAN as a dispersant.

[Example 7] Production of a polymer polyol composition- 7

A polymer polyol composition (F-7) having a content of polymer particles of 50 % and a viscosity of 3900 mPa·s (25 °C) was obtained in the same manner as that of Example 1 except that 10 parts of the reactive dispersant (D1-2) was used in place of 10 parts of SAN as a dispersant.

[Example 8] Production of a polymer polyol composition- 8

Into a four-neck flask identical to that used in Example 1, 10 parts of the reactive dispersant (D1-1), 440 parts of G50, and 80 parts of xylene were added, and after substituting nitrogen for the air in the flask, heated at 130 °C in the nitrogen atmosphere while stirring (until the polymerization was completed). Then, a material previously prepared by mixing 250 parts of a 2.2-mole propylene oxide adduct of allyl alcohol (Mn = 186, SP =10.2), 150 parts of AN, and 100 parts of St, and a material previously prepared by mixing 50 parts of G50 and 1 part ofAVN were dropped continuously over 1 hour using dropping pumps simultaneously, and polymerization was carried out for 2 hours at 130°C. After adding 20 parts of water to the reaction product, xylene and unreacted monomers were removed from the reaction product by stripping under reduced pressure of 10 mmHg at 130°C for 3 hours. Thus, a polymer polyol composition (F-8) having a content of polymer particles of 50 % and a viscosity of 3100 mPa·s (25°C) was obtained.

[Comparative Example 1] Comparative example of the production of a polymer polyol composition-1

Into a four-neck flask identical to that used in Example 1, 50 parts of G50 was added, and heated at 125°C while stirring. Then, a material previously prepared by mixing 450 parts of St, 300 parts of ACN, 20 parts of GMAP, 680 parts of G50, and 4 parts ofAVN was dropped continuously over 4 hour using a dropping pump, so that polymerization

was carried out. Then, unreacted monomers were removed from the reaction product by stripping under reduced pressure. Thus, a comparative polymer polyol composition (F'-9) having a content of polymer particles of 50 % and a viscosity of 20000 mPa·s (25 °C) was obtained.

[Comparative Example 2] Comparative example of the production of a polymer polyol composition- 2

A comparative polymer polyol composition (F'-10) having a content of polymer particles of 40 % and a viscosity of 5540 mPa·s (25 °C) was obtained using the same method and devices as those of Comparative Example 1 except that 150 parts of G50, as well as 280 parts of St, 120 parts of AN, 8 parts of GMAP, 442 parts of G50, and 1.6 parts of AVN were used.

[Comparative Example 3] Comparative example of the production of a polymer polyol composition- 3

A comparative polymer polyol composition (F'-11) having a content of polymer particles of 30 % and a viscosity of 2000 mPa·s (25 °C) was obtained using the same method and devices as those of Comparative Example 1 except that 175 parts of G50, as well as 210 parts of St, 90 parts of AN, 6 parts of GMAP, 519 parts of G50, and 1.2 parts of AVN were used.

[Examples 1 to 8 and Comparative Examples 1 to 3] Production of polyurethane foams

Using the polymer polyol compositions (F-1 to F-8) of the present invention and the comparative polymer polyol compositions (F'-9 to F'-11) obtained in Examples 1 to 8 and Comparative Examples 1 to 3, polyurethane foams were produced by the foaming process below, at the mixing ratios of components for polyurethane foams shown in Tables 1 and 2. The evaluation results for the properties of these foams are shown in Tables 1 and 2.

[Foaming Process]

(1) The temperatures of the polymer polyol composition and the organic polyisocyanate were adjusted each to 25 ± 2 °C.
(2) A polymer polyol composition, a foam stabilizer, water and a catalyst were put into a stainless beaker of 1-liter volume in this order, and stirred and mixed at room temperature (25 ± 2 °C). Immediately, an organic polyisocyanate was added. Using an agitator (Homodisper; manufactured by TOKUSHU KIKA INDUSTRIES, Ltd.; stirring condition, 2000 rpm × 6 seconds), the mixture was stirred, and foaming was carried out.
(3) After stopping stirring, the content was put into a wooden box of 25 × 25 × 10 cm, and a polyurethane foam was obtained.

[Table 1]

| | Example | | | | | | | |
|---|---|---|---|---|---|---|---|---|
| | 1 | 2 | 8 | 4 | 5 | 6 | 7 | 8 |
| Polymer Polyol | F-1 | F-2 | F-3 | F-4 | F-5 | F-6 | F-7 | F-8 |
| Concentration of polymer particles [mass %] | 50 | 50 | 50 | 50 | 50 | 50 | 50 | 50 |
| Viscosity (25 °C) [mPa•s] | 4000 | 4000 | 4200 | 4900 | 5300 | 3800 | 3900 | 3100 |
| Upper limit of viscosity in the inequality (1) (25°C) [mPa•s] | 7800 | 7800 | 7800 | 7800 | 7800 | 7800 | 7800 | 7800 |
| Polyol-soluble polymer [mass %] | 1 | 1 | 2 | 2 | 3 | 1 | 1 | 1 |
| Dispersion stability (1) | ○ | ○ | ○ | ○ | ○ | ○ | ○ | ○ |
| Dispersion stability (2) | ○ | ○ | ○ | ○ | ○ | ◎ | ◎ | ◎ |
| Polyurethane Foam [mixing ratio (parts)] | | | | | | | | |
| Polymer Polyol | 100 | 100 | 100 | 100 | 100 | 100 | 100 | 100 |

(continued)

| | Example | | | | | | | |
|---|---|---|---|---|---|---|---|---|
| | 1 | 2 | 8 | 4 | 5 | 6 | 7 | 8 |
| Water | 2.7 | 2.7 | 2.7 | 2.7 | 2.7 | 2.7 | 2.7 | 2.7 |
| Catalyst A | 0.04 | 0.04 | 0.04 | 0.04 | 0.04 | 0.04 | 0.04 | 0.04 |
| Catalyst B | 0.30 | 0.30 | 0.30 | 0.30 | 0.30 | 0.30 | 0.30 | 0.30 |
| F-242T | 1.0 | 1.0 | 1.0 | 1.0 | 1.0 | 1.0 | 1.0 | 1.0 |
| TDI-80 | 30.7 | 31.4 | 80.9 | 31.2 | 31.7 | 30.7 | 30.7 | 30.7 |
| Foam Properties | | | | | | | | |
| Density [kg/m$^3$] | 33.0 | 33.1 | 33.3 | 83.4 | 33.0 | 38.2 | 33.1 | 33.2 |
| 25 % ILD [kgf/314cm$^2$] | 43.4 | 43.2 | 42.7 | 43.6 | 43.1 | 44.5 | 44.8 | 45.1 |
| Tensile strength [kgf/cm$^2$] | 1.50 | 1.48 | 1.49 | 1.46 | 1.36 | 1.50 | 1.48 | 1.49 |
| Tear strength [kgf/cm] | 0.91 | 0.83 | 0.87 | 0.89 | 0.85 | 0.88 | 0.92 | 0.91 |
| Elongation [%] | 71 | 70 | 71 | 69 | 70 | 70 | 72 | 70 |
| Resilience [%] | 30 | 32 | 29 | 28 | 31 | 29 | 31 | 30 |
| Air Flow [ft$^3$ /min] | 3.0 | 3.1 | 2.9 | 3.0 | 2.7 | 2.8 | 2.6 | 2.9 |
| Compression set [%] | 30.9 | 82.0 | 32.7 | 34.8 | 32.7 | 30.1 | 29.5 | 29.4 |

(Examples 6 to 8 relate to the claimed invention)

[Table 2]

| | Comparative Example | | |
|---|---|---|---|
| | 1 | 2 | 3 |
| Polymer Polyol | F'-9 | F'-10 | F'-11 |
| Concentration of polymer particles [mass %] | 50 | 40 | 30 |
| Viscosity (25°C) [mPa·s] | 20000 | 5540 | 2000 |
| Upper limit of viscosity in the inequality (1) (25 °C) [mPa·s] | 7800 | 3200 | 1580 |
| Polyol-soluble polymer [mass %] | 10 | 8 | 6 |
| Dispersion stability (1) | Δ | Δ | Δ |
| Dispersion stability (2) | × | × | × |
| Polyurethane Foam [mixing ratio (parts)] | | | |
| Polymer polyol | 100 | 100 | 100 |
| Water | 2.7 | 2.7 | 2.7 |
| Catalyst A | 0.04 | 0.04 | 0.04 |
| Catalyst B | 0.30 | 0.30 | 0.30 |
| F-242T | 1.0 | 1.0 | 1.0 |
| TDI-80 | 32.0 | 33.0 | 33.9 |
| Foam Properties | | | |
| Density [kg/m$^3$] | 33.4 | 33.2 | 33.8 |

(continued)

| | Comparative Example | | |
|---|---|---|---|
| | 1 | 2 | 3 |
| 25 % ILD [kgf/314cm$^2$] | 40.3 | 35.7 | 32.4 |
| Tensile strength [kgf/cm$^2$] | 1.46 | 1.57 | 1.66 |
| Tear strength [kgf/cm] | 0.75 | 0.76 | 0.71 |
| Elongation [%] | 65 | 90 | 105 |
| Resilience [%] | 24 | 27 | 28 |
| Air Flow [ft$^3$/min] | 1.3 | 3.0 | 3.7 |
| Compression set [%] | 37.5 | 28.2 | 10.5 |

The foam properties in Tables 1 and 2 are evaluated by the methods as follows.

Density (kg/m$^3$): according to JIS K6400-1997 [item 5]
25 % ILD (kgf/314 cm$^2$): according to JIS K6382-1995 [item 5.3]
Tensile Strength (kgf/cm$^2$): according to JIS K6301-1995 [item 3]
Tear Strength (kgf/cm): according to JIS K6301-1995 [item 9]
Elongation (%): according to JIS K6301-1995 [item 3]
Resilience (%): according to JIS K6400-1997 [item 7]
Air Flow (ft$^3$/min): using Dow type flowmeter [manufactured by AMSCOR, Ltd.] (test piece 5 cm × 5 cm × 2.5 cm)
Compression Set (%): according to JIS K6382-1995 [item 5.5]

Usually, as the properties of polyurethane foams, a density in the range of 15 to 50 kg/m$^3$ is preferable, and larger values of 25 % ILD, tensile strength, tear strength, elongation, resilience and air flow are preferable. Furthermore, a smaller value of compression set is preferable.

As seen from Tables 1 and 2, the polymer polyol compositions of Examples 1 to 8 have lower viscosities than the polymer polyol composition of Comparative Example 1, and have more excellent foam properties, particularly in 25% ILD (hardness), air flow and compression set when being formed into polyurethane foams. Moreover, the foams of the polymer polyol compositions of Examples 1 to 8 had the same or higher tear strength, tensile strength, elongation, and resilience than that of Comparative Example 1. Furthermore, because the polymer polyol compositions of Comparative Examples 2 and 3 have lower concentrations of polymer particles than the polymer polyol compositions of Examples 1 to 8 and Comparative Example 1, they have low viscosities. However, the properties of the polyurethane foams produced from the former are significantly inferior to the properties of the polyurethane foams produced from the latter, particularly in 25 % ILD (hardness). In general, as the concentration of polymer particles increases, the tensile strength, elongation, resilience and air flow decrease, and the compression set increases. However, the polyurethane foams using the polymer polyol compositions of the present invention [Examples 1 to 8] exhibit the same or superior properties than the polyurethane foam of Comparative Example 1 having the same concentration of polymer particles.

INDUSTRIAL APPLICABILITY

According to the polymer polyol compositions of the present invention and the methods for producing the same, polymer polyol compositions having low viscosities and exceptionally good dispersion stability can be obtained, even when the polymer polyol compositions have a higher concentration of polymer particles than conventional polymer polyol compositions. Thus, the operation efficiency can be improved significantly in the production of polyurethane resins.

Furthermore, the polyurethane resins produced using the polymer polyol compositions of the present invention as an essential component of a polyol exhibit much more excellent 25 % ILD (hardness) than those produced using conventional polymer polyol compositions, when they have the same viscosity. Furthermore, the polyurethane resins produced using the polymer polyol compositions of the present invention have considerably better 25 % ILD of an urethane resin, air flow and compression set than those produced using conventional polymer polyol compositions, when the concentrations of polymer particles are the same.

Because of the above-mentioned effects, the polyurethane resins produced using the polymer polyol compositions of the present invention are exceptionally suitable as polyurethane foams for the uses such as interior parts of automobiles, interior fittings such as furniture.

## Claims

**1.** A polymer polyol composition comprising a dispersion medium composed of a polyol (A), or (A) and a diluent (C), and polymer particles (B) dispersed in the dispersion medium, wherein the polymer particles (B) are formed by polymerizing an ethylenically unsaturated compound (b) in the dispersion medium in the presence of a reactive dispersant (D11), the reactive dispersant (D11) being an unsaturated polyol having a nitrogen-containing bond, which is formed by bonding a substantially saturated polyol (a) with a monofunctional active hydrogen compound (e) having at least one polymerizable unsaturated group via a polyisocyanate (f), and whose average value of a ratio of a number of unsaturated groups to a number of nitrogen-containing bonds originating from an NCO group in one molecule of (D11) is 0.1 to 0.3.

**2.** The polymer polyol composition according to claim 1, wherein:

a content of (B) is 35 to 75 mass% based on a mass of the polymer polyol composition; and
an amount of a soluble polymer (P) dissolved in (A) is not more than 5 mass% based on a mass of (A).

**3.** The polymer polyol composition according claim 1, wherein:

a content of (B) is 35 to 75 mass% based on a mass of the polymer polyol composition; and
a viscosity V (mPa•s) of the polymer polyol composition measured by a Brookfield viscosimeter at 25 °C is in the range of an inequality (1) expressed as:

$$V \leqq (Va - Va \times C/10)\hat{}\,[e\hat{}\,x], \qquad (1)$$

where

$$x = 0.0010354 \times Bp\hat{}\,1.5,$$

Va is a viscosity (mPa•s) of (A) measured by a Brookfield viscosimeter at 25 °C,
C is a content of (C) in the polymer polyol composition (mass %),
Bp is a content of (B) in the polymer polyol composition (mass %), symbol^ indicates a power, and
symbol "e" is the base of the natural logarithm.

**4.** A method for producing a polymer polyol composition, which method comprises polymerizing an ethylenically unsaturated compound (b) in a polyol (A) in the presence of a dispersant (D) and in the presence or absence of a diluent (C), wherein a reactive dispersant (D11) is used as the reactive dispersant (D), so as to obtain the polymer polyol composition according to claim 1, the reactive dispersant (D11) being an unsaturated polyol having a nitrogen-containing bond, which is formed by bonding a substantially saturated polyol (a) with a monofunctional active hydrogen compound (e) having at least one polymerizable unsaturated group via a polyisocyanate (f), whose average value of a ratio of a number of unsaturated groups to a number of nitrogen-containing bonds originating from an NCO group in one molecule of (D11) is 0.1 to 0.3.

**5.** The method according to claim 4, wherein the polymerization is carried out in the presence of the diluent (C) that comprises an aromatic hydrocarbon-based solvent.

**6.** A method for producing a polyurethane resin, which method comprises reacting a polyol component with a polyisocyanate component in the presence or absence of a blowing agent, wherein the polymer polyol composition according to any one of claims 1 to 3 is used as at least a part of the polyol component.

## Patentansprüche

**1.** Eine Polymerpolyolzusammensetzung, umfassend ein Dispersionsmedium, zusammengesetzt aus einem Polyol (A) oder (A) und einem Verdünnungsmittel (C), und Polymerteilchen (B), welche in dem Dispersionsmedium dispergiert sind, wobei die Polymerteilchen (B) durch Polymerisieren einer ethylenisch ungesättigten Verbindung (b)

in dem Dispersionsmedium in Gegenwart eines reaktionsfähigen Dispergiermittels (D11) gebildet werden, wobei das reaktionsfähige Dispergiermittel (D11) ein ungesättigtes Polyol mit einer Stickstoff enthaltenden Bindung ist, welches durch Binden eines im Wesentlichen gesättigten Polyols (a) mit einer Verbindung (e) mit monofunktionellem aktiven Wasserstoff, welche mindestens eine polymerisierbare ungesättigte Gruppe aufweist, über ein Polyisocyanat (f) gebildet wird und dessen Mittelwert eines Verhältnisses aus einer Anzahl an ungesättigten Gruppen zu einer Anzahl an Stickstoff enthaltenden Bindungen, welche von einer NCO-Gruppe stammen, in einem Molekül von (D11) 0,1 bis 0,3 beträgt.

**2.** Die Polymerpolyolzusammensetzung gemäß Anspruch 1, wobei:

ein Gehalt an (B) 35 bis 75 Massen-% beträgt, bezogen auf eine Masse der Polymerpolyolzusammensetzung; und
eine Menge eines in (A) gelösten löslichen Polymers (P) nicht mehr als 5 Massen-% beträgt, bezogen auf eine Masse von (A).

**3.** Die Polymerpolyolzusammensetzung gemäß Anspruch 1, wobei:

ein Gehalt an (B) 35 bis 75 Massen-% beträgt, bezogen auf eine Masse der Polymerpolyolzusammensetzung; und
eine Viskosität V (mPa·s) der Polymerpolyolzusammensetzung, gemessen mit einem Brookfield-Viskosimeter bei 25°C, im Bereich einer Ungleichung (1) liegt, ausgedrückt als:

$$V \leq (Va - Va \text{ x } C/10)\text{^ } [e\text{^}x] \qquad (1),$$

wobei

$$x = 0{,}0010354 \text{ x } Bp\text{^}1{,}5,$$

Va eine Viskosität (mPa·s) von (A), gemessen mit einem Brookfield-Viskosimeter bei 25°C, ist,
C ein Gehalt an (C) in der Polymerpolyolzusammensetzung (Massen-%) ist,
Bp ein Gehalt an (B) in der Polymerpolyolzusammensetzung (Massen-%) ist,
das Symbol ^ eine Potenz angibt und
das Symbol "e" die Basis des natürlichen Logarithmus ist.

**4.** Ein Verfahren zur Herstellung einer Polymerpolyolzusammensetzung, wobei das Verfahren das Polymerisieren einer ethylenisch ungesättigten Verbindung (b) in einem Polyol (A) in Gegenwart eines Dispergiermittels (D) und in Gegenwart oder Abwesenheit eines Verdünnungsmittels (C) umfasst, wobei ein reaktionsfähiges Dispergiermittel (D11) als das reaktionsfähige Dispergiermittel (D) verwendet wird, um die Polymerpolyolzusammensetzung gemäß Anspruch 1 zu erhalten, wobei das reaktionsfähige Dispergiermittel (D11) ein ungesättigtes Polyol mit einer Stickstoff enthaltenden Bindung ist, welches durch Binden eines im Wesentlichen gesättigten Polyols (a) mit einer Verbindung (e) mit monofunktionellem aktiven Wasserstoff, welche mindestens eine polymerisierbare ungesättigte Gruppe aufweist, über ein Polyisocyanat (f) gebildet wird, dessen Mittelwert eines Verhältnisses aus einer Anzahl an ungesättigten Gruppen zu einer Anzahl an Stickstoff enthaltenden Bindungen, welche aus einer NCO-Gruppe stammen, in einem Molekül von (D11) 0,1 bis 0,3 beträgt.

**5.** Das Verfahren gemäß Anspruch 4, wobei die Polymerisation in Gegenwart eines Verdünnungsmittels (C), welches ein Lösungsmittel auf Basis aromatischer Kohlenwasserstoffe umfasst, durchgeführt wird.

**6.** Ein Verfahren zur Herstellung eines Polyurethanharzes, wobei das Verfahren eine Umsetzung einer Polyolkomponente mit einer Polyisocyanatkomponente in Gegenwart oder Abwesenheit eines Treibmittels umfasst, wobei die Polymerpolyolzusammensetzung gemäß einem der Ansprüche 1 bis 3 als mindestens einen Teil der Polyolkomponente verwendet wird.

## Revendications

1. Composition de polyol polymère comprenant un milieu de dispersion constitué d'un polyol (A), ou de (A) et d'un diluant (C), et des particules polymères (B) dispersées dans le milieu de dispersion, dans laquelle les particules polymères (B) sont formées par polymérisation d'un composé éthyléniquement insaturé (b) dans le milieu de dispersion en présence d'un dispersant réactif (D11), le dispersant réactif (D11) étant un polyol insaturé présentant une liaison contenant de l'azote, qui est formé en liant un polyol pratiquement saturé (a) avec un composé d'hydrogène actif monofonctionnel (e) présentant au moins un groupe polymérisable insaturé via un polyisocyanate (f), et dont la valeur moyenne d'un rapport d'un nombre de groupes insaturés à un nombre de liaisons contenant de l'azote provenant d'un groupe NCO dans une molécule de (D11) est de 0,1 à 0,3.

2. Composition de polyol polymère selon la revendication 1, dans laquelle :

   une teneur de (B) est de 35 à 75 % en masse rapportée à une masse de la composition de polyol polymère ; et une quantité d'un polymère soluble (P) dissous dans (A) est d'au plus 5 % en masse rapportée à une masse de (A).

3. Composition de polyol polymère selon la revendication 1, dans laquelle :

   une teneur de (B) est de 35 à 75 % en masse rapportée à une masse de la composition de polyol polymère ; et une viscosité V (mPa•s) de la composition de polyol polymère mesurée par un viscosimètre Brookfield à 25°C se trouve dans l'intervalle d'une inégalité (1) exprimée par :

$$V \leq (Va - Va \times C/10)\hat{}\ [e\hat{}\ x], \qquad (1)$$

   où

$$x = 0{,}0010354 \times Bp\hat{}1{,}5,$$

   Va est une viscosité (mPa•s) de (A) mesurée par un viscosimètre Brookfield à 25°C,
   C est une teneur de (C) dans la composition de polyol polymère (% en masse),
   Bp est une teneur de (B) dans la composition de polyol polymère (% en masse),
   le symbole^ indique une puissance, et
   le symbole "e" est la base du logarithme népérien.

4. Procédé de production d'une composition de polyol polymère, lequel procédé comprend la polymérisation d'un composé éthyléniquement insaturé (b) dans un polyol (A) en présence d'un dispersant (D) et en présence ou en l'absence d'un diluant (C), dans lequel un dispersant réactif (D11) est utilisé comme le dispersant réactif (D), afin d'obtenir la composition de polyol polymère selon la revendication 1, le dispersant réactif (D11) étant un polyol insaturé présentant une liaison contenant de l'azote, qui est formé en liant un polyol pratiquement saturé (a) avec un composé d'hydrogène actif monofonctionnel (e) présentant au moins un groupe polymérisable insaturé via un polyisocyanate (f), dont la valeur moyenne d'un rapport d'un nombre de groupes insaturés à un nombre de liaisons contenant de l'azote provenant d'un groupe NCO dans une molécule de (D11) est de 0,1 à 0,3.

5. Procédé selon la revendication 4, dans lequel la polymérisation est réalisée en présence d'un diluant (C) qui comprend un solvant à base d'hydrocarbure aromatique.

6. Procédé de production d'une résine de polyuréthane, lequel procédé comprend la réaction d'un constituant de polyol avec un constituant de polyisocyanate en présence ou en l'absence d'un agent gonflant, dans lequel la composition de polyol polymère selon l'une quelconque des revendications 1 à 3 est utilisée comme au moins une partie du constituant de polyol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 8504891 A
- JP 61115919 A
- US 4226756 A
- US 3383351 A
- JP 8333508 A
- JP 5059134 A
- JP 7196749 A
- JP 9077968 A
- EP 1006133 A
- US P4299924 A


### Non-patent literature cited in the description


- *Polymer Engineering and Science,* vol. 14, 147-154